# EUROPÄISCHE PATENTSCHRIFT

(11) **EP 2 069 680 B1**
(45) Veröffentlichungstag und Bekanntmachung des Hinweises auf die Patenterteilung: **17.03.2010**
(21) Anmeldenummer: 07815124.8
(22) Anmeldetag: 25.09.2007
(51) Int. Cl.: F17C 3/08

(54) **BEHÄLTER ZUR AUFNAHME VON BEI TIEFEN TEMPERATUREN AUFZUBEWAHRENDEN MEDIEN UND/ODER GERÄTEN**
CONTAINER FOR RECEIVING MEDIA AND/OR UNITS WHICH ARE TO BE STORED AT LOW TEMPERATURES
RÉCIPIENT DE COLLECTE DE FLUIDES ET/OU D'APPAREILS QUI DOIVENT ÊTRE CONSERVÉS À BASSE TEMPÉRATURE

(30) Priorität: 27.09.2006 AT 16112006; 28.08.2007 AT 13482007
(43) Veröffentlichungstag der Anmeldung: 17.06.2009
(73) Patentinhaber: REBERNIK, Matthias, 8010 Graz (AT)
(72) Erfinder: REBERNIK, Matthias, 8010 Graz (AT)
(74) Vertreter: Margotti, Herwig Franz
(86) Internationale Anmeldenummer: PCT/AT2007/000451
(87) Internationale Veröffentlichungsnummer: WO 2008/036991

(56) Entgegenhaltungen:
- EP-A- 0 014 250
- EP-A- 0 397 168
- FR-A- 2 410 211
- JP-A- 5 126 297
- US-A- 3 021 027

## Beschreibung

Die Erfindung betrifft einen Behälter zur Aufnahme von bei tiefen Temperaturen, vorzugsweise unter 150 Kelvin, aufzubewahrenden kryogenen Medien und/oder Geräten, mit einer Außenschale und einer mit dieser lagestabil über Positionierelemente direkt oder indirekt verbundenen bzw. an dieser direkt oder indirekt abgestützten Isolierschale, die gegebenenfalls von einer oder mehreren weiteren Isolierschalen umgeben ist, wobei entweder das Gerät oder eine Innenschale zur Aufbewahrung von kryogenen Medien lagestabil über Befestigungselemente mit der Außenschale verbunden ist

Unter kryogenen Medien sind verflüssigte Gase zu verstehen, beispielsweise Helium, Stickstoff, Sauerstoff, Erdgas oder Wasserstoff. Im flüssigen Zustand beträgt die Temperatur dieser Gase üblicherweise weniger als 150° Kelvin. Zur Lagerung dieser Medien ist eine Innenschale, die in einer Außenschale eingebaut ist, vorgesehen.

Es ist zur Temperaturisolierung eines Behälters für kryogene Medien, nachfolgend Kryotank genannt, zweckmäßig, die Innenschale so stark und so vollständig wie möglich zu isolieren, um Wärmeverluste möglichst zu vermeiden. Der Zwischenraum zwischen der Innenschale und der Außenschale ist zumeist evakuiert. Die Innenschale muss jedoch in der Außenschale befestigt werden. Dies erfolgt zweckmäßig in einer Weise, dass zwischen den beiden Schalen möglichst wenige Wärmebrücken ausgebildet werden. Da jedoch zwischen der Innenschale und der Außenschale notwendigerweise irgendwelche Strukturelemente zur Halterung ausgebildet sein müssen, kommt es über diese Halterungselemente zwangsläufig zu Wärmeverlusten.

In der US 2,926,810 ist beispielsweise ein Tank aus einer Außenschale und einer Innenschale dargestellt, wobei die Innenschale über Verstrebungen mit der Außenschale verbunden ist. Die Verstrebungen aus einem Material mit geringer Wärmeleitfähigkeit sind von möglichst geringem Durchmesser, um die Wärmebrücken so gering wie möglich zu halten.

Weiters können zur zusätzlichen Isolierung der Innenschale in den Zwischenraum zwischen der Außen- und der Innenschale Isolierschichten und/oder Strahlungsschilde eingebracht werden. So ist beispielsweise aus der DE 195 46 619 ein Kryobehälter bekannt, bei dem die Innenschale mit zahlreichen Isoliermatten umgeben ist.

Weiters ist aus der US 4,988,014 ein Kryobehälter bekannt, bei dem zwischen der Außenschale und der Innenschale ein Wärmeschild aus Aluminium oder Kupfer vorgesehen ist. Dieser Wärmeschild ist ebenso wie die Innenschale an zwei Aufhängungen an entgegengesetzten Endbereichen des Kryobehälters aufgehängt.

Aus der FR 2711640 ist ein Kryobehälter mit einer Innenschale und einer Außenschale bekannt, bei dem im Zwischenraum Polster bzw. Kissen aus abwechselnd leitendem Material und isolierendem Material angeordnet sind.

Aus der WO 2006/034521 A1 ist es bekannt, die Innenschale gegenüber einer Außenschale eines Kryotanks mittels Permanentmagneten berührungslos in Schwebe zu halten. Zwischen der Innenschale und der Außenschale sind keine weiteren Isolierschichten vorgesehen.

Magnetische Isolierschichten für einen Kryotank zwischen einer Außen- und einer Innenschale sind aus der US 2006/0196876 A1 zu entnehmen, wodurch ebenfalls Isolierräume zwischen den Schichten bzw. zwischen den Schichten und der Außen- und der Innenschale gebildet werden.

Aus der AT 502 191 B1 ist ein Kryotank bekannt, gemäß dem eine Innenschale mittels einer Stützstruktur an einer Außenschale abgestützt ist, wobei Strahlungsbarrieren, die ein hohes Reflexionsvermögen aufweisen, vorgesehen sind, die zahlreiche Wärmebrücken ergeben, da die Strahlungsbarrieren selbst sowohl die Innenschale direkt kontaktieren und auch direkt aneinander abgestützt sind.

Ein Kryotank der eingangs beschriebenen Art ist beispielsweise aus der EP 0 014 250 B1 bekannt, wobei eine Innenschale über aus Einzelelementen zusammengesetzten Befestigungsbändem an der Außenschale abgestützt ist. Zwischen der Innenschale und der Außenschale sind mehrere Isolierschalen angeordnet, die an den Befestigungsbändern befestigt sind. Diese Isolierschalen sind in Distanz voneinander und in Distanz von der Innen- und von der Außenschale vorgesehen. Ein Kryobehälter dieser Art ist aufwändig in der Konstruktion und nur schwierig zusammenzubauen. Zudem belasten die Isolierschalen die Befestigungselemente, mit denen die Innenschale an der Außenschale befestigt ist.

Die Erfindung bezweckt die Vermeidung dieser Nachteile und Schwierigkeiten und stellt sich die Aufgabe, einen Behälter der eingangs beschriebenen Art zu schaffen, bei dem nicht nur die Innenschale in der Außenschale sicher aufgehängt ist und gegen auftretende mechanische und thermische Beanspruchungen gut gesichert ist, sondern der auch neben geringen Wärmever!usten einen einfachen Zusammenbau gestattet, sodass auch selbst bei einer Vielzahl von Isolierschalen der Herstellungsaufwand gering ist. Eine weitere Aufgabe liegt darin, die Isolierschale sicher im Zwischenraum zwischen der Innen- und der Außenschale unter Einhaltung eines möglichst konstanten Abstandes sowohl zur Innen- als auch zur Außenschale sowie auch zu gegebenenfalls vorgesehenen weiteren Isolierschalen zu fixieren.

Diese Aufgabe wird erfindungsgemäß dadurch gelöst, dass jede Isolierschale zumindest zweiteilig ausgebildet ist und an der Außenschale und/oder am Gerät und/oder an der Innenschale mittels von den Befestigungselementen unabhängigen Positionierelementen befestigt ist, wobei die Isolierschale von der Außen- bzw. Innenschale bzw. vom Gerät bzw. von einer weiteren Isolierschale unter Bildung eines Spaltes berührungslos beabstandet ist.

Ein wesentlicher Vorteil der Erfindung ist die Tatsache, dass der erfindungsgemäße Kryobehälter gänzlich ohne Superisolationsschichten bzw. ohne MLI (multi layer insulation) auskommt, was sowohl preislich als auch hinsichtlich des Fertigungsverfahrens Vorteile mit sich bringt.

Um eine effektive Isolierung als Strahlungsschilde zu erreichen, ist es vorteilhaft, wenn die Isolierschalen untereinander beabstandet sind, wobei durch ein dazwischenliegendes Vakuum die Isolationswirkung weiter vergrößert werden kann. Es ist aus Platzgründen, insbesondere für die Anwendung in Kraftfahrzeugen, vorteilhaft, wenn zwischen den Isolierschalen möglichst geringe Abstände ausgebildet sind.

Erfindungsgemäß gelingt es in einfacher Weise, im Ruhezustand einen direkten Wandkontakt zwischen Innen- und Außenschale und Isolierschale und Gerät zu vermeiden.

Vorzugsweise sind Positionierelemente von Bolzen gebildet.

Gemäß einer anderen vorteilhaften Ausführungsform sind Positionierelemente als Federelemente, insbesondere als Schraubenfederelemente, ausgebildet.

Zweckmäßig spannen Positionierelemente eine Isolierschale gegen die Innenschale oder gegen die Außenschale und sind dementsprechend einerseits an der Isolierschale und andererseits an der Innen- bzw. Außenschale abgestützt bzw. verankert.

Bei Vorhandensein von zwei oder mehreren Isolierschalen sind Positionierelemente einerseits an einer ersten Isolierschale und andererseits an einer der ersten Isolierschale benachbarten weiteren Isolierschale abgestützt bzw. verankert.

Vorzugsweise sind die Isolierschalen bzw. ist die Außenschale an den Stellen, an denen Positionierelemente vorgesehen sind, mit sich längs der Positionierelemente erstreckenden Aufwölbungen zur jeweils örtlichen Aufnahme eines Positionierelements versehen, wobei die Positionierelemente an den Endbereichen der Aufwölbungen abgestützt bzw. verankert sind. Hierdurch ist es möglich, die Positionierelemente derart anzuordnen, dass sie eine möglichst große Länge aufweisen, sodass Wärmeübertragungen durch die Positionierelemente minimiert werden können.

Gemäß einer bevorzugten Ausführungsform sind Bolzen einerseits mit einem an einem seiner Enden vorgesehenen Bund und andererseits mit einem selbstsperrenden Sicherungsring, der am anderen Ende eines Bolzens aufgeschoben ist, am Gerät bzw. an der Innen- bzw. Außenschale bzw. an der Isolierschale abgestützt bzw. verankert.

Eine weitere bevorzugte Ausführungsform ist **dadurch gekennzeichnet, dass** Bolzen mit an ihren Enden vorgesehenen Schnappnasen versehen sind, die zum Einsetzen in Öffnungen und zum Verankern der Bolzen in diesen Öffnungen dienen, wobei die Öffnungen am Gerät bzw. an der Innen- bzw. Außenschale bzw. an einer Isolierschale vorgesehen sind.

Zur Einstellung von Vorspannkräften und/oder zum Ausgleich von Wärmedehnungen sind vorteilhaft Bolzen mit einem Ende mittels einer Schraubverbindung mit dem Gerät bzw. mit der Innen- oder Außenschale oder mit einer Isolierschale verankert.

Vorteilhaft ist die Längsachse der Positionierelemente zur Oberfläche der Isolierschale bzw. des Gerätes bzw. der Innen- oder Außenschale im Bereich der Befestigung der Positionierelemente geneigt.

Es ist auch möglich, die Positionierelemente von Magneten zu bilden.

Eine zweckmäßige Ausführungsform ist **dadurch gekennzeichnet, dass** die Positionierelemente bezüglich einer Längsachse des Kryotanks um diese Längsachse herum gleichmäßig verteilt angeordnet sind, wobei zweckmäßig drei Positionierelemente um die Längsachse herum verteilt angeordnet sind.

Vorzugsweise ist die Isolierschale bzw. sind die Isolierschalen jeweils von zwei Halbschalen gebildet, welche Halbschalen mittels einer Steckverbindung miteinander zu einer Isolierschale verbindbar sind, wobei zweckmäßig jede der Halbschalen mittels Positionierelementen direkt oder indirekt an der Außen- und/oder der Innenschale bzw. an einer weiteren Isolierschale befestigt ist.

Eine weitere Ausführungsform ist **dadurch gekennzeichnet, dass** die Isolierschale(n) mittels Positionierelementen unter Erzeugung von die Teile der Isolierschale gegeneinander sichernden Kräften, hervorgerufen vorzugsweise durch Federn, an der Außen- und/oder der Innenschale befestigt ist (sind).

Es ist auch möglich, dass die Teile einer Isolierschale direkt gegeneinander lagegesichert sind, wie z.B. durch Haken, eine Klebeverbindung oder durch eine Schweißnaht.

Eine weitere bevorzugte Ausführungsform ist **dadurch gekennzeichnet, dass** Positionierelemente als Schraubenfedern ausgebildet sind, wobei die Schraubenfedern zur Abstützung benachbarter Isolierschalen zueinander fluchtend angeordnet sind und die Isolierschalen Zugriffsöffnungen zu den Schraubenfedern aufweisen.

Vorzugsweise ist eine Magnetspule über Befestigungselemente mit der Außenschale lagestabil verbunden.

Eine vorteilhafte Variante der Erfindung ist **dadurch gekennzeichnet, dass** die Isolierschalen über, insbesondere flexible bzw. biegsame, Aufhängungsgurte bzw. -bänder sowohl untereinander als auch mit der als Innentank ausgebildeten Isolierschale und/oder der als Außenbehälter ausgebildeten Außenschale verbunden sind.

Um die Wärmeverluste gering zu halten, ist es weiters vorteilhaft, die Aufhängungsgurte möglichst lang auszubilden.

Darüber hinaus ist es vorteilhaft, die Aufhängungsgurte so zu legen, dass allein durch die besondere Art der mäanderförmigen Wicklung und die daraus resultierenden Kräfte die Stabilität der Isolierschalen bzw. des Kryobehälters erhöht wird.

Grundsätzlich sind zwei Ausführungsformen des erfindungsgemäßen Kryobehälters möglich, wobei bei der ersten Ausführungsform die Isolierschalen am Außenbehälter befestigt sind und bei der zweiten Ausführungsform die Isolierschalen am Innenbehälter befestigt sind. Erstere Ausführungsform hat Vorteile hinsichtlich der Isolationswirkung.

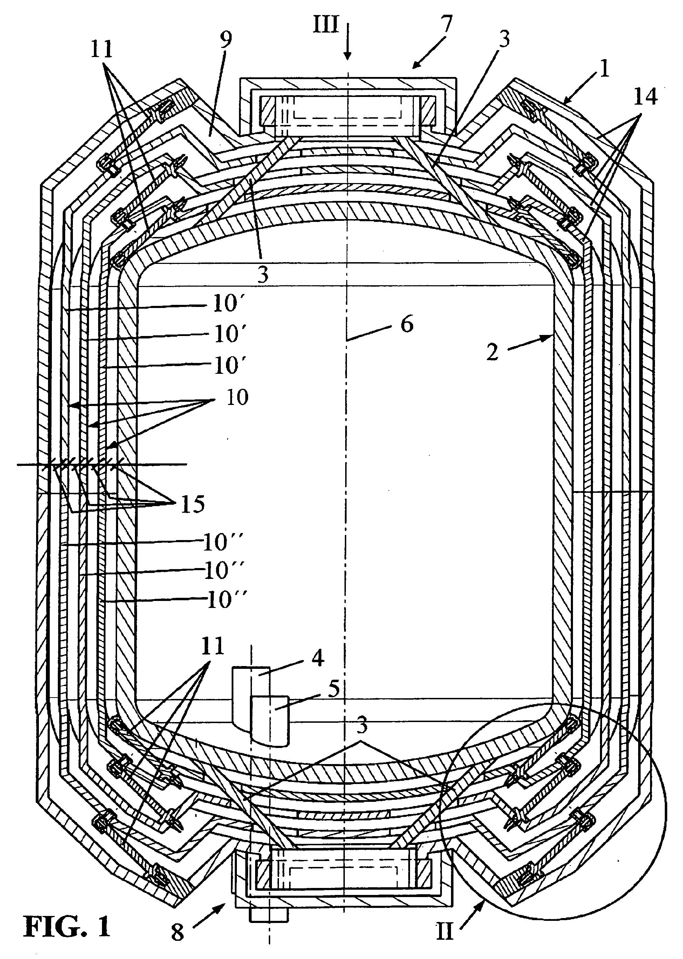

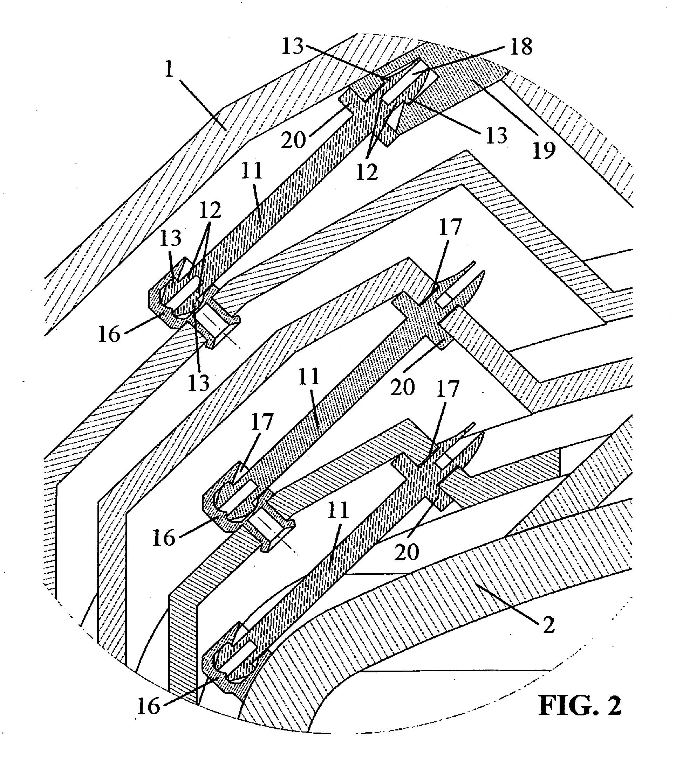

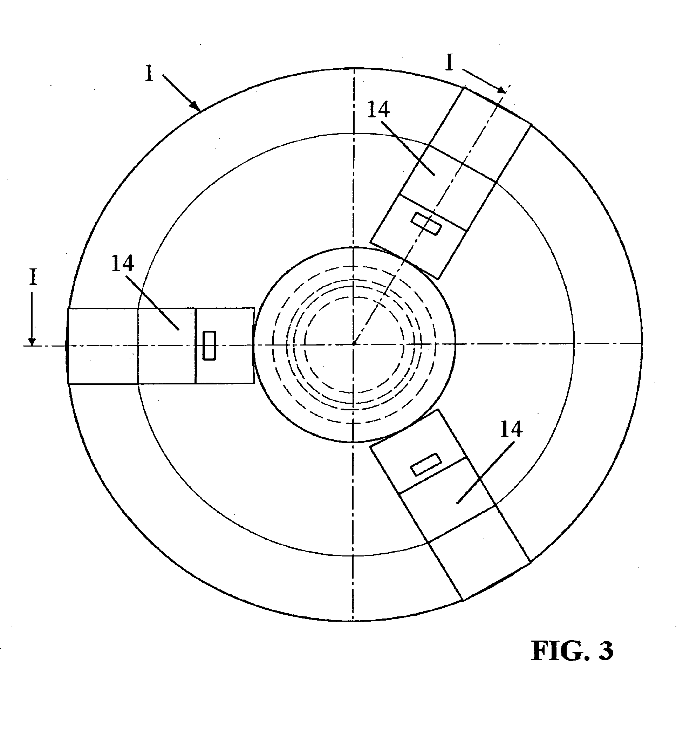

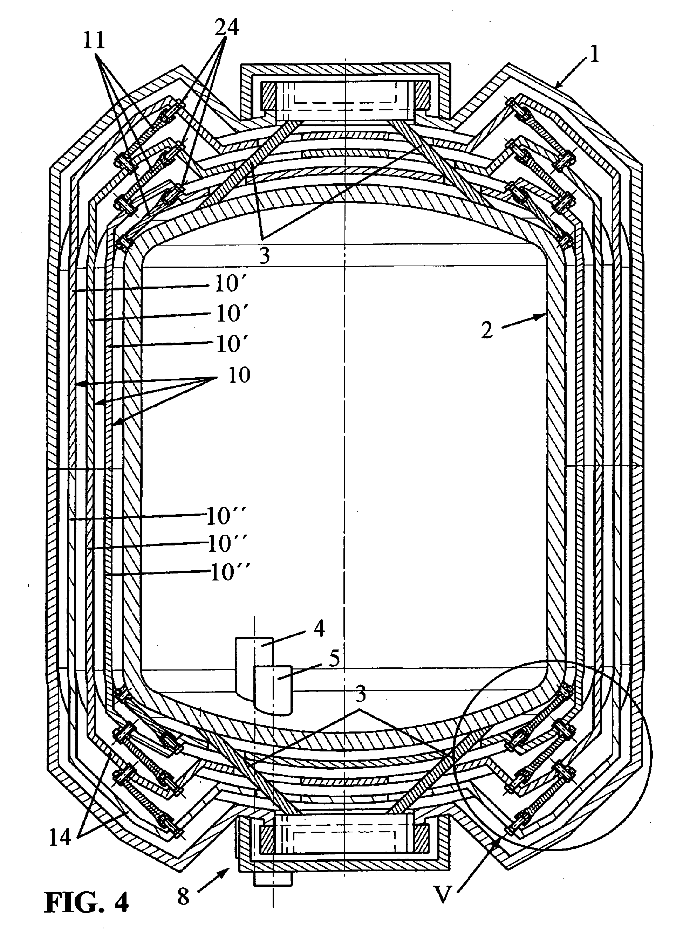

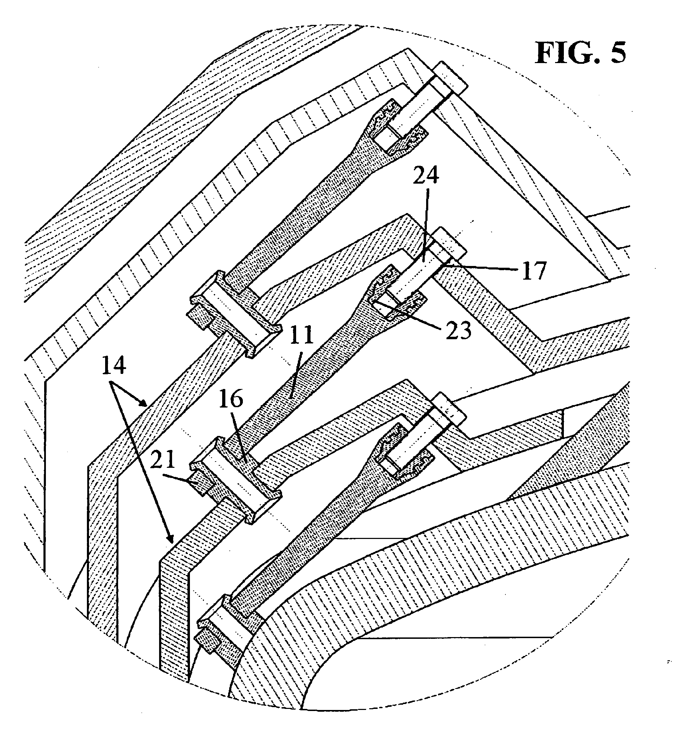

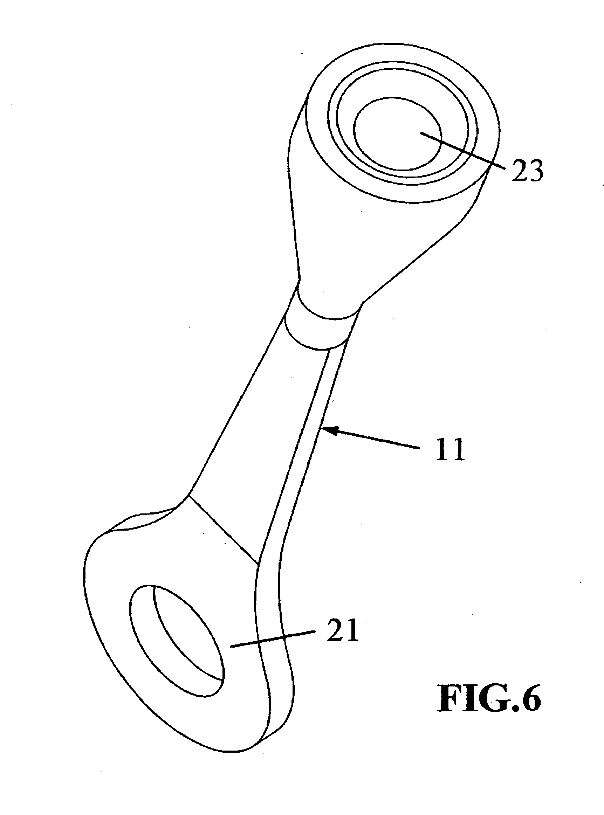

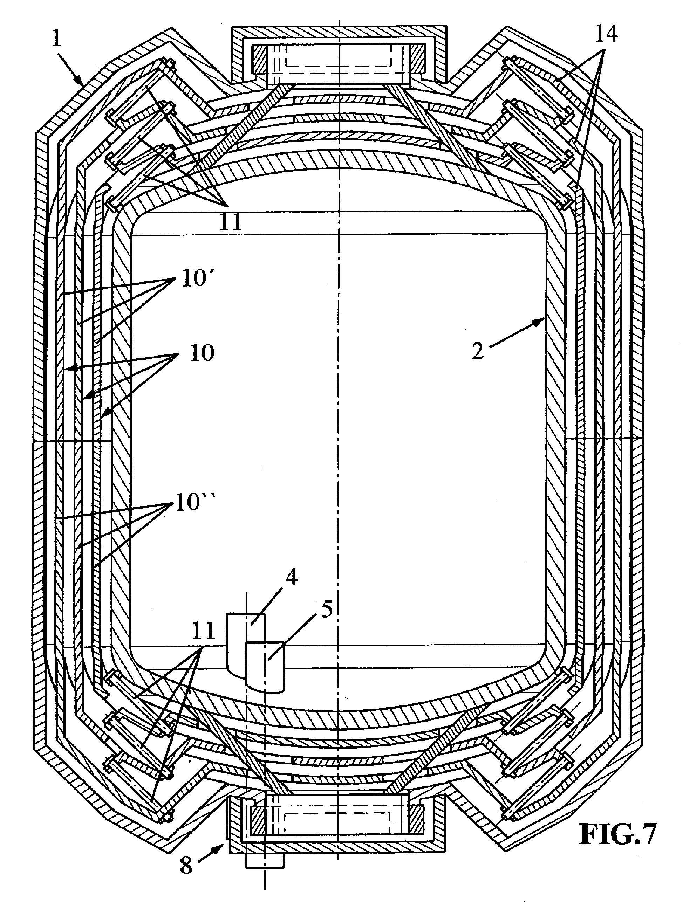

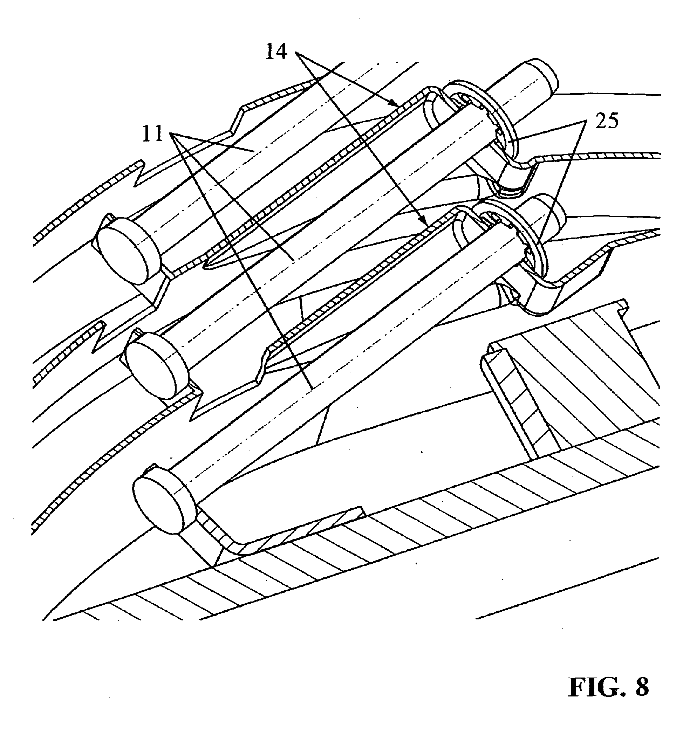

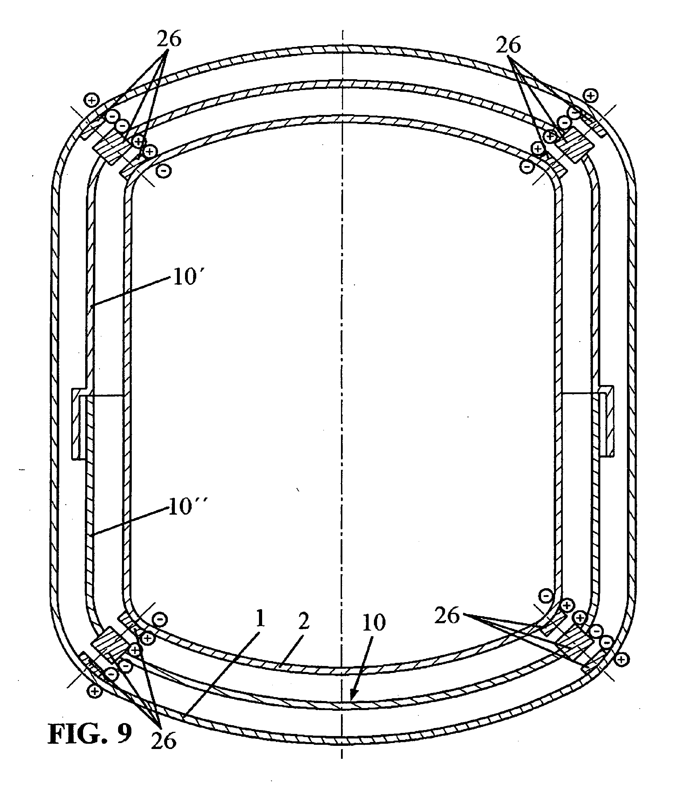

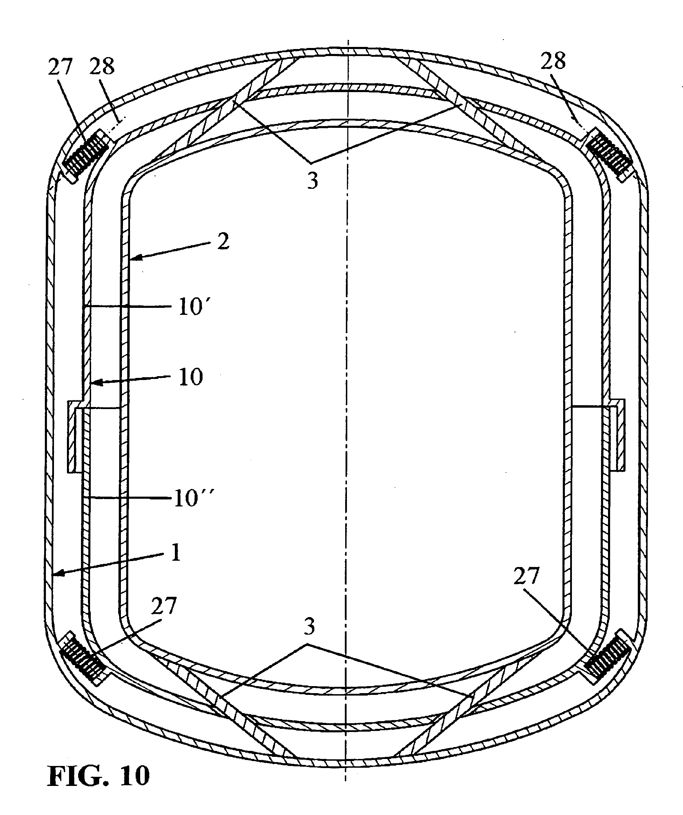

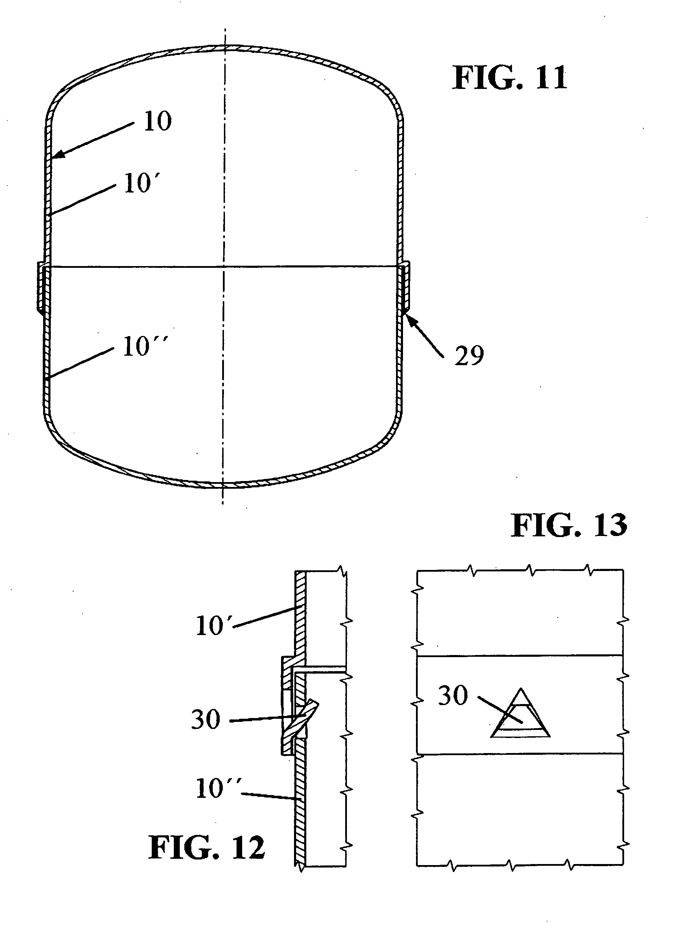

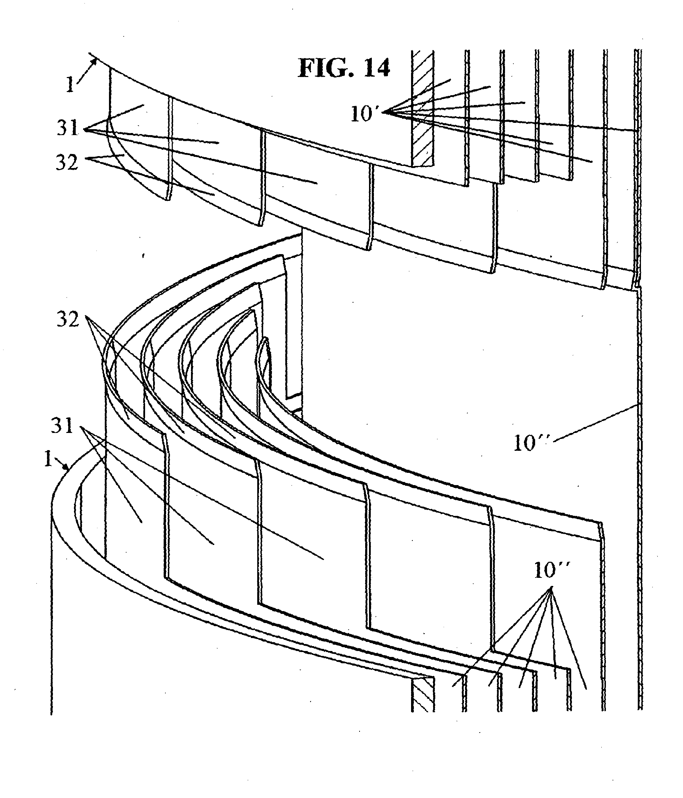

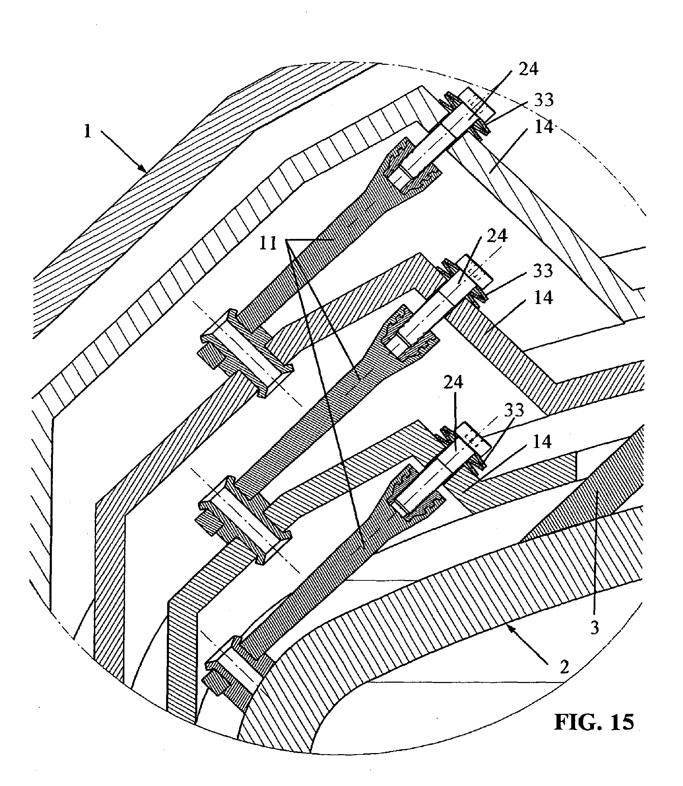

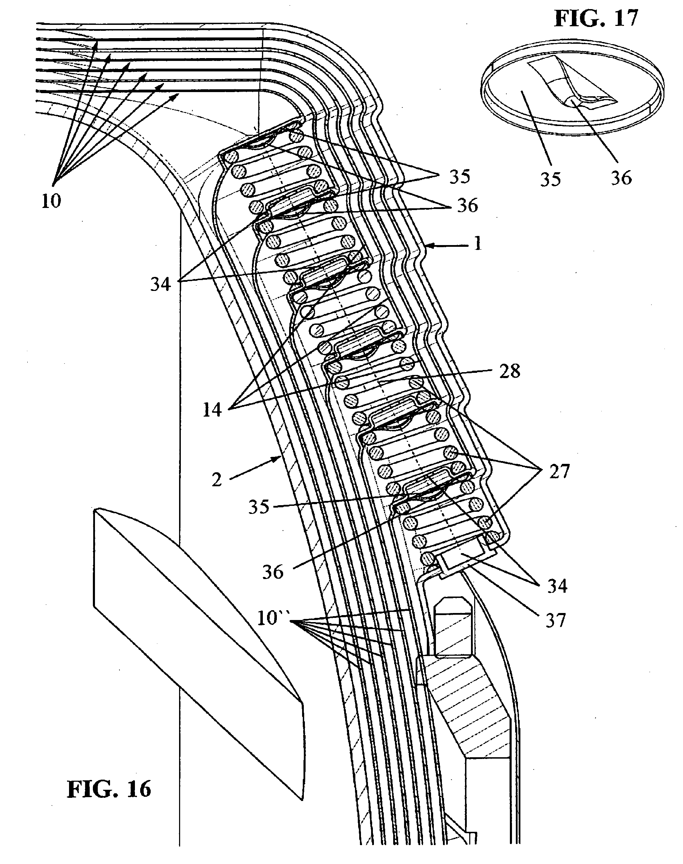

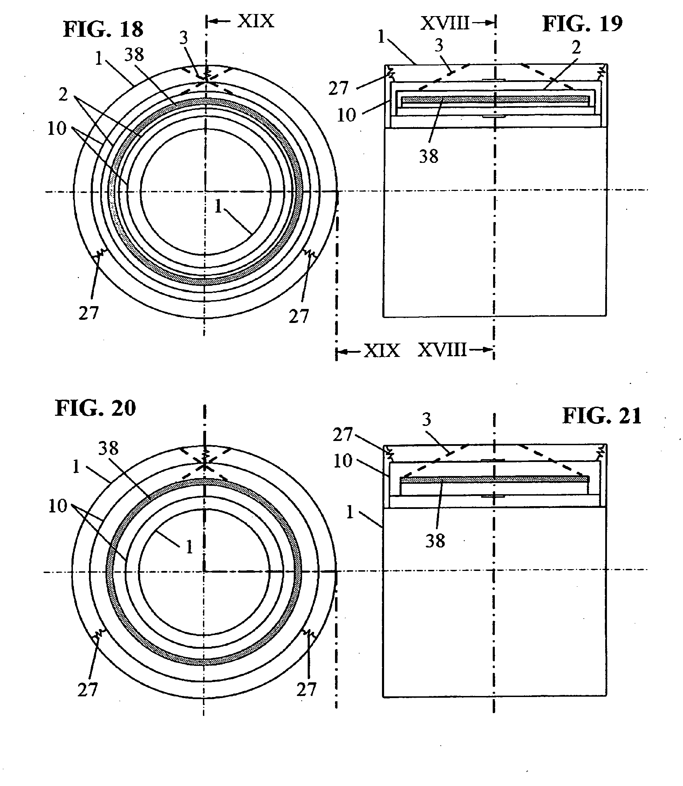

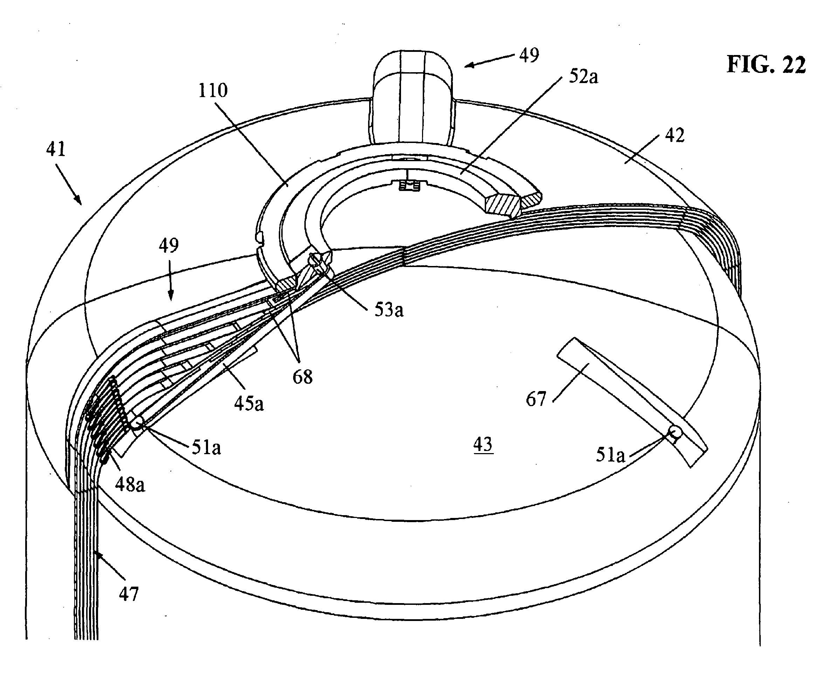

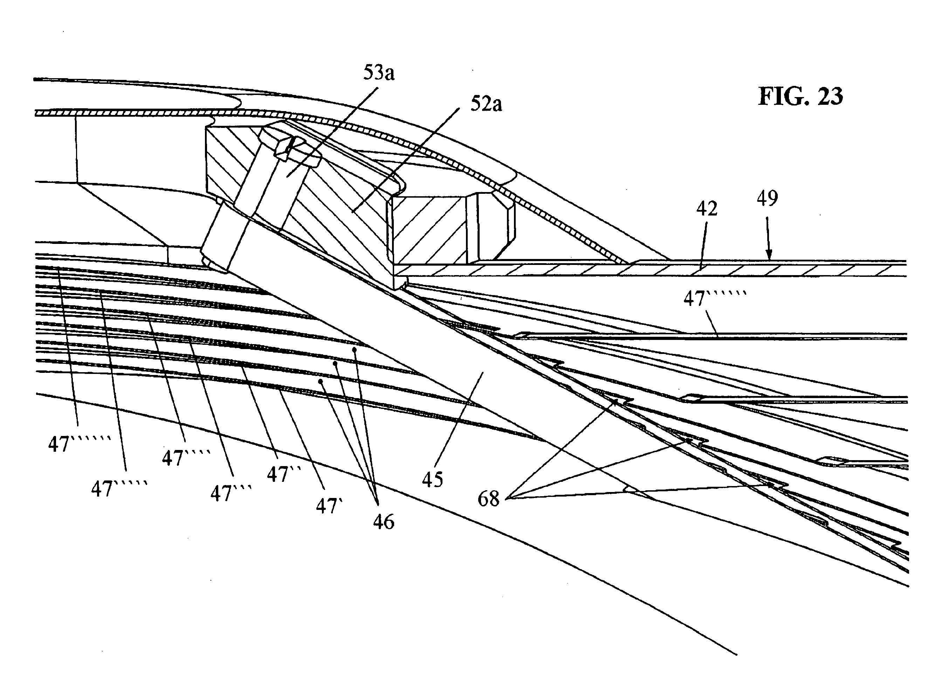

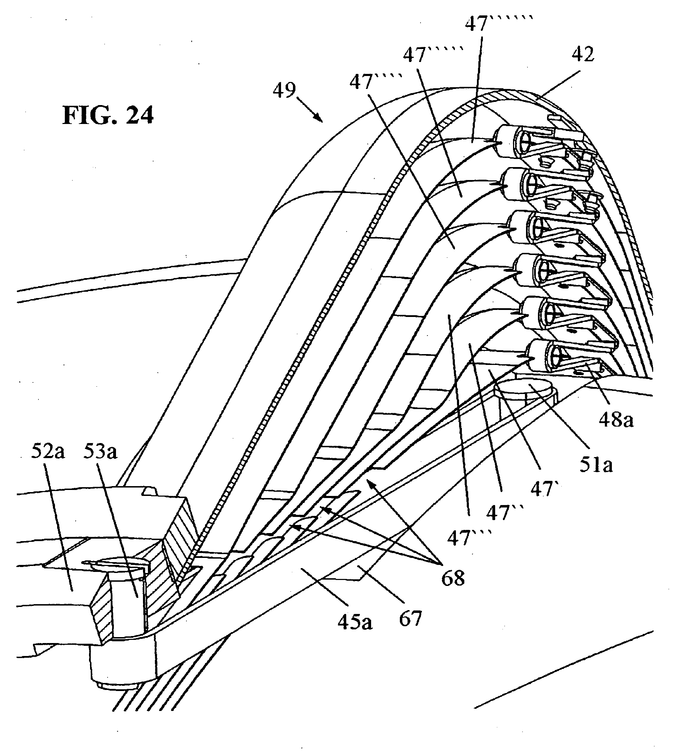

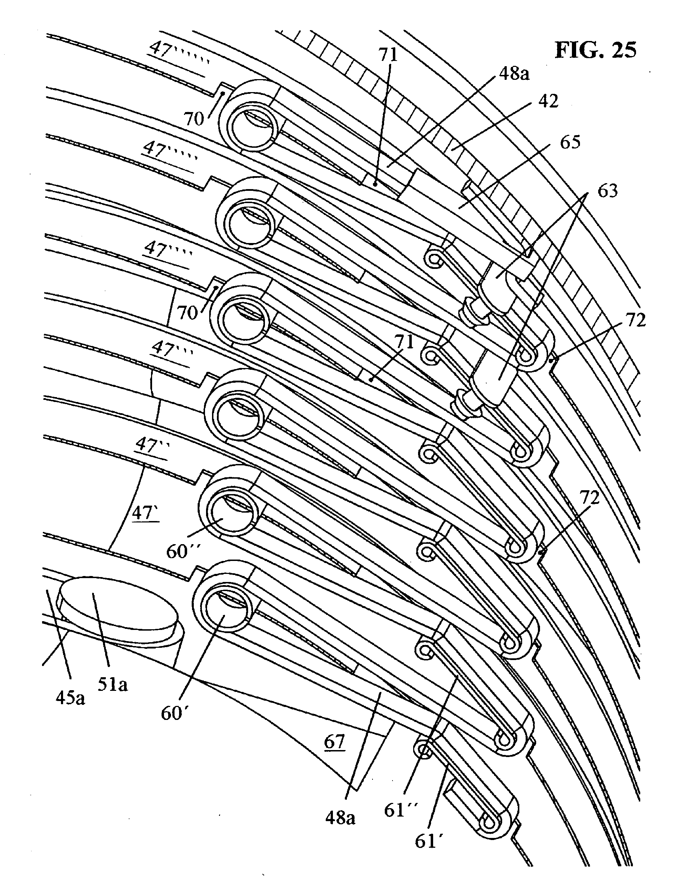

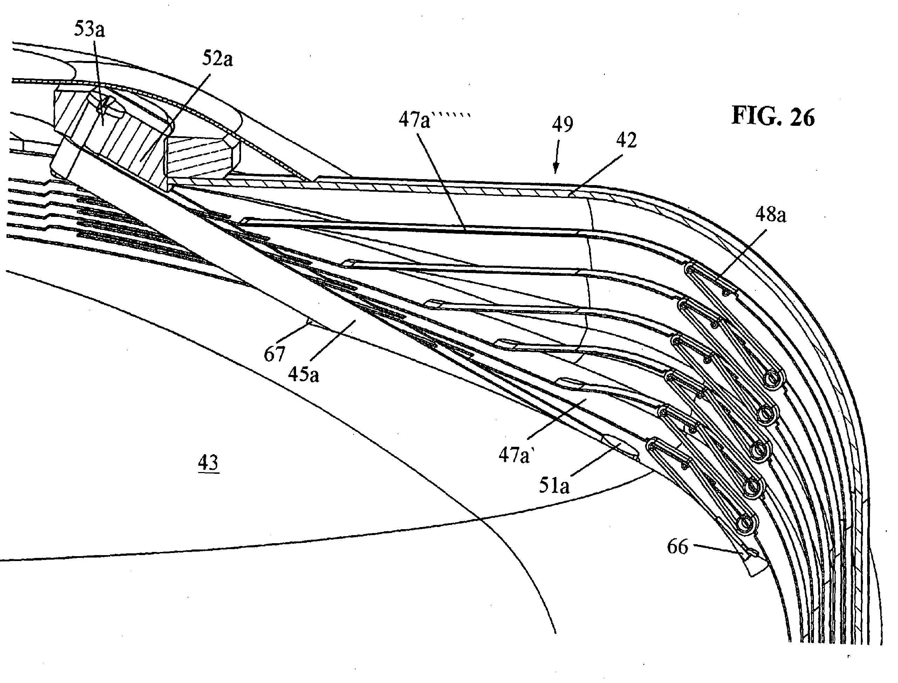

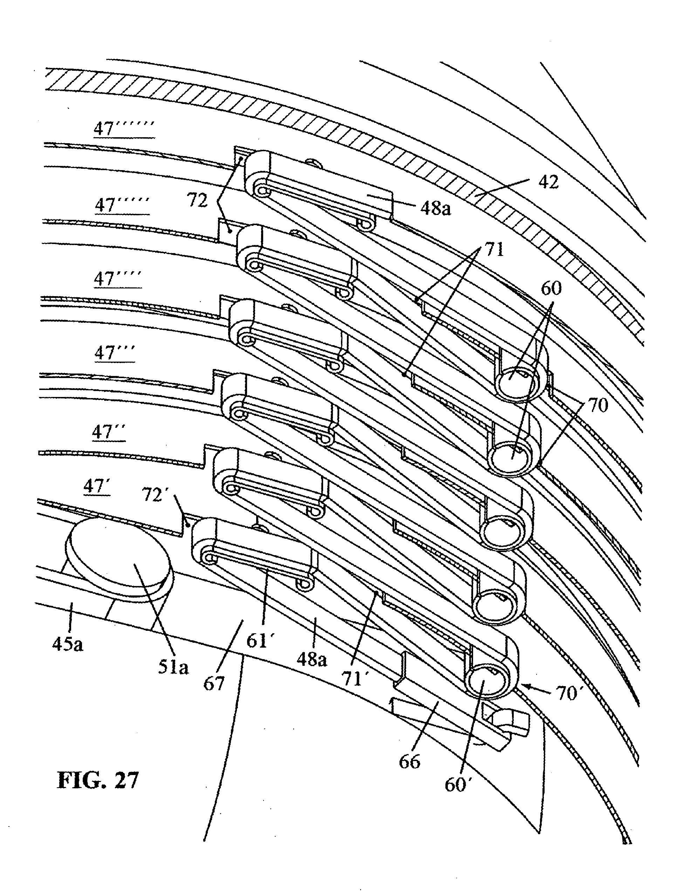

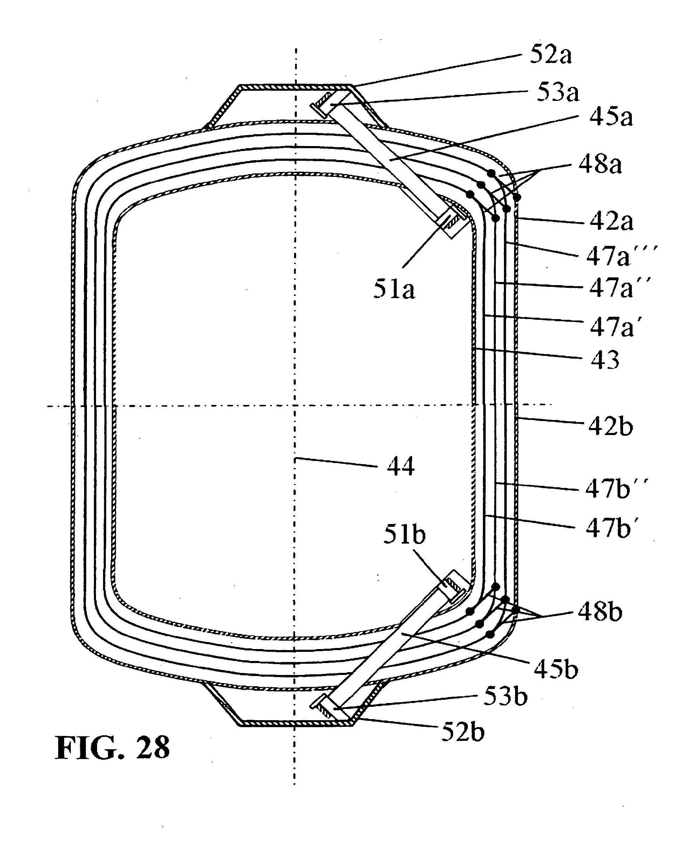

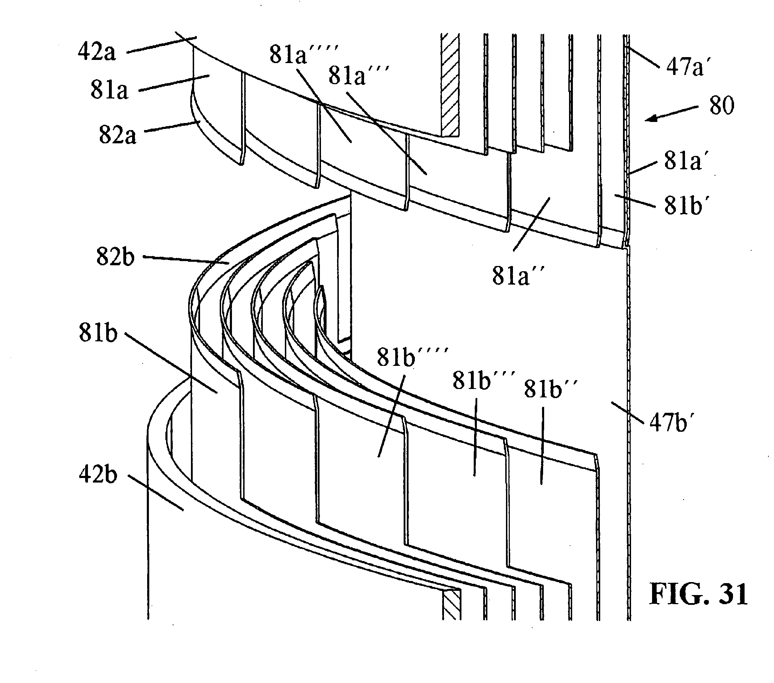

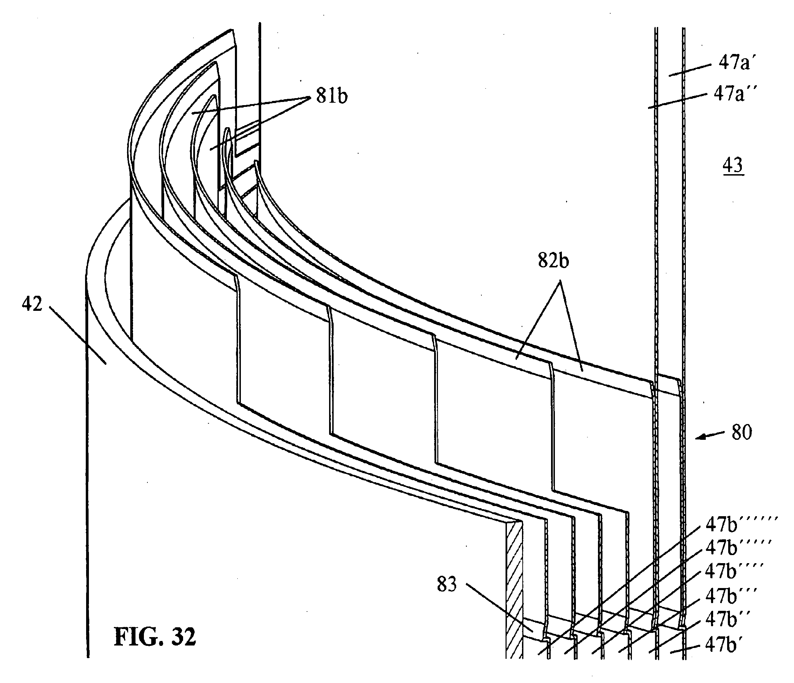

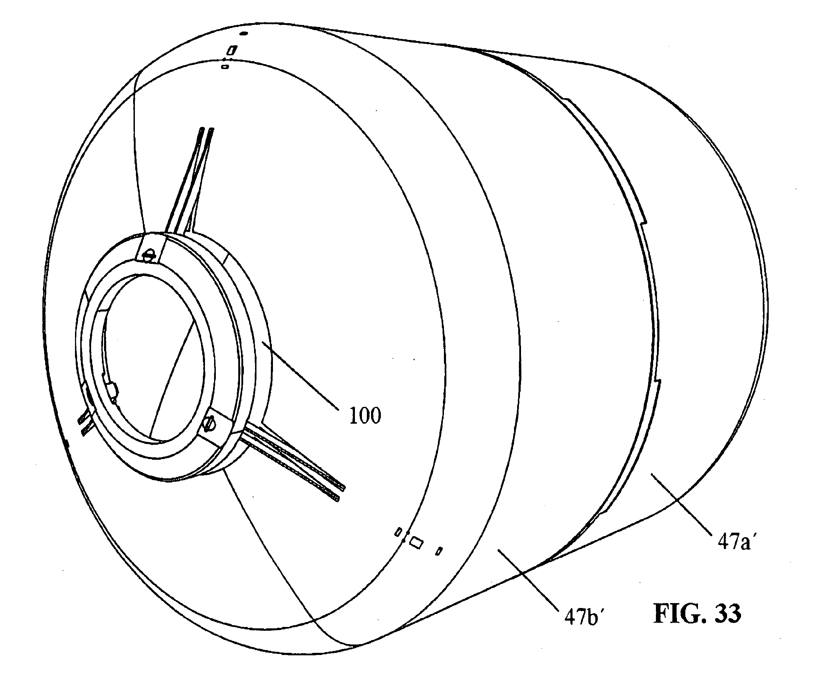

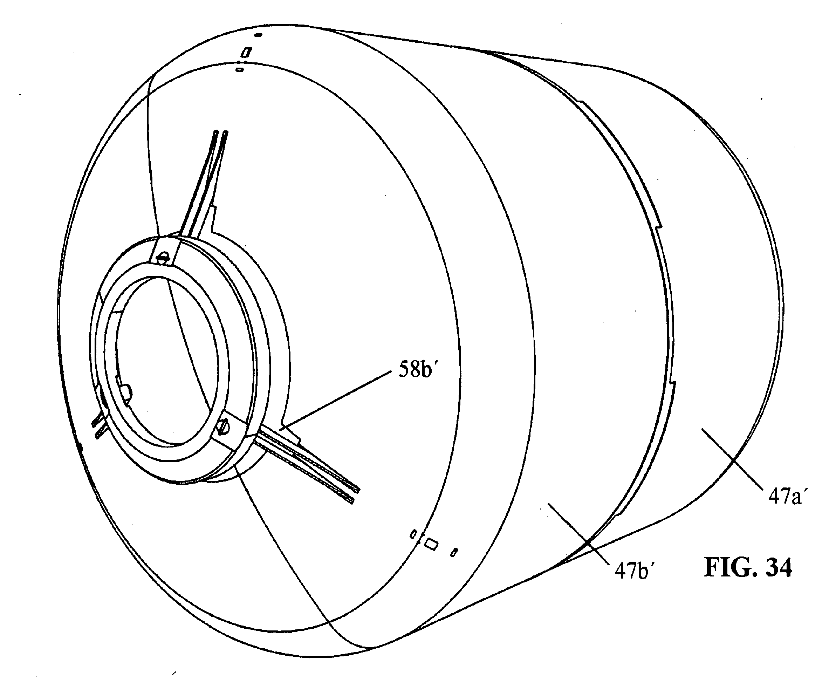

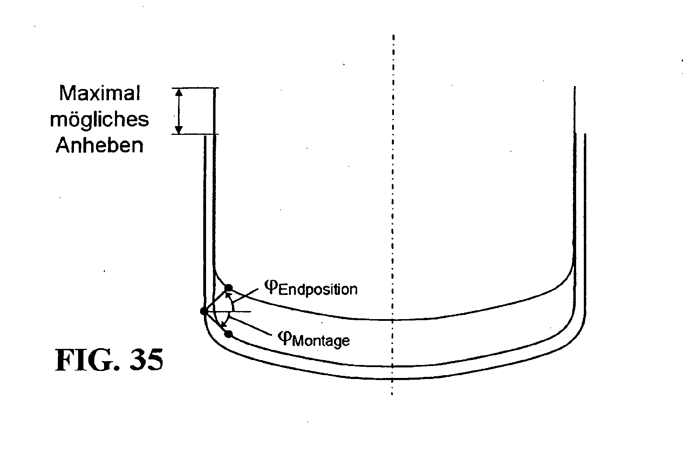

In den Unteransprüchen 22 bis 39 sind weitere zweckmäßige Varianten definiert.
Die Erfindung ist nachfolgend anhand mehrerer Ausführungsbeispiele, die in der Zeichnung schematisch dargestellt sind, näher erläutert. Fig. 1 zeigt einen Längsschnitt durch einen Behälter nach den Linien I-I der Fig. 3 nach einer ersten Ausführungsform, Fig. 2 zeigt das Detail II der Fig. 1 und Fig. 3 ist eine Stirnansicht des Behälters in Richtung des Pfeiles III der Fig. 1. Eine weitere Ausführungsform ist in zu den Fig. 1 und 2 analogen Darstellungen in den Fig. 4 und 5 erläutert, wobei Fig. 5 ein Detail V der Fig. 4 veranschaulicht. Fig. 6 ist eine Schrägrissdarstellung eines Positionierelements gemäß der Ausführungsform der Fig. 4 und 5. Die Fig. 7 und 8 zeigen wiederum in zu den Fig. 1 und 2 analogen Darstellungen eine weitere Ausführungsform, wobei Fig. 8 eine Schrägrissdarstellung eines Details der Fig. 7 veranschaulicht. Fig. 9 zeigt eine Ausführungsform in zu Fig. 1 analoger Schnittdarstellung. Weitere Varianten sind in den Fig. 10 und 11 ebenfalls analog zu Fig. 1 veranschaulicht. Fig. 12 zeigt ein Detail in Schnittdarstellung, Fig. 13 in Draufsicht. Fig. 14 zeigt die Zusammensetzung einzelner Teile der Isolierschalen. Fig. 15 zeigt in zu Fig. 5 analoger Darstellung eine Variante der Ausführungsform gemäß Fig. 5 und Fig. 16 eine Variante der in Fig. 10 dargestellten Ausführungsform in zu Fig. 5 analoger Darstellung. Fig. 17 zeigt einen Einzelteil der Variante gemäß Fig. 16. Ein Behälter zur Aufbewahrung einer Magnetspule ist in den Fig. 18 und 19 in unterschiedlichen Schnittdarstellungen veranschaulicht. Die Fig. 20 und 21 zeigen eine Variante in zu den Fig. 18 und 19 analoger Darstellung. Fig. 22 zeigt eine perspektivische Ansicht der oberen Hälfte einer Ausführungsform eines erfindungsgemäßen Kryobehälters, bei dem die Isolierschalen am Außenbehälter befestigt sind. Fig. 23 zeigt eine Detailansicht der ersten Befestigungselemente gemäß Fig. 21. Fig. 24 zeigt eine Detailansicht der einzelnen Isolierschalen des Kryobehälters nach Fig. 21. Fig. 25 zeigt eine Detailansicht der Befestigung der einzelnen Isolierschalen. Fig. 26 zeigt eine alternative Ausführungsform des Kryobehälters, bei dem die Isolierschalen am Innentank befestigt ist. Fig. 27 zeigt eine Detailansicht der am Innentank befestigen Isolierschalen gemäß Fig. 26. Die Fig. 28, 29 und 30 zeigen den Ablauf eines Verfahrens zur Zusammensetzung des Kryobehälters gemäß Fig. 21. Die Fig. 31 und 32 zeigen die Zusammensetzung der einzelnen Teilschalen der Isolierschalen. Die Fig. 33 und 34 zeigen Verfahrensschritte beim Zusammenbau noch einer Variante. Fig. 35 zeigt einen besonderen Verfahrensschritt bei einer Montage.

Der in Fig. 1 im Längsschnitt dargestellte, im wesentlichen zylindrisch gestaltete Kryotank weist eine Außenschale 1 auf, in der im äquidistanten Abstand eine Innenschale 2 vorgesehen ist. Diese Innenschale ist über Befestigungselemente 3 (auch Magnete sind denkbar) mit der Außenschale 1 lagestabil verbunden. Zum Befüllen und Entleeren durchsetzen zwei Rohre 4, 5 die Außen- und Innenschale an einem stirnseitigen Ende des Kryotanks. Die Befestigungselemente 3 erstrecken sich in zur Längsachse 6 des Kryotanks geneigter Anordnung an den beiden Stirnseiten 7, 8 des Kryotanks von der Innenschale zur Außenschale.

In dem Raum 9 zwischen der Außenschale und der Innenschale, der evakuiert sein kann, sind Isolierschalen 10 vorgesehen - beim dargestellten Ausführungsbeispiel drei, es könnte jedoch auch nur eine Isolierschale 10 vorgesehen sein oder eine beliebige Vielzahl. Um zwischen den Isolierschalen 10 und der Innen- und der Außenschale 1, 2 Berührungen zu vermeiden, sind die Isolierschalen 10, die jeweils aus zwei Hälften 10' und 10" zusammengesetzt sind - die Teilungsebene befindet sich etwa mittig der Länge der Längsachse 6 und erstreckt sich quer zu dieser -, mittels Positionierelementen 11 an der Innenschale 2 bzw. an der Außenschale 1 bzw. an einer weiteren Isolierschale 10 befestigt.

Die Positionierelemente 11 - die als Bolzen ausgebildet sind - sind derart vorgesehen, dass über die Positionierelemente 11 die beiden Teile 10' und 10" - nachfolgend auch Halbschalen 10', 10" genannt - der Isolierschale 10 gegeneinander spannenden Kräfte erzeugt werden. Gemäß dem in Fig. 1 dargestellten Ausführungsbeispiel werden durch die Positionierelemente 11, mit denen die innerste Isolierschale 10 an der Innenschale 2 befestigt ist, die Teile 10' und 10" dieser Isolierschale 10 gegeneinander pressenden Kräfte durch in den Positionierelementen 11 wirkende Zugkräfte bewirkt, wogegen die Teile 10' und 10" der äußersten Isolierschale 10, die benachbart zur Außenschale 1 vorgesehen ist, mittels in den Positionierelementen wirkenden Druckkräften mit gegeneinander pressenden Kräften beaufschlagt sind.

Wie insbesondere der Fig. 2 zu entnehmen ist, sind die Positionierelemente von Bolzen gebildet, deren Enden mit von an Federzungen 12 angeordneten Schnappnasen 13 gebildeten Schnappverbindungen mit der Innenschale 2 bzw. der Außenschale 1 bzw. den Isolierschalen 10 verbunden sind. Die Anordnung der Positionierelement 11 ist ebenfalls geneigt zur Längsachse 6 des Kryotanks vorgesehen, sodass die Positionierelemente, die ja einen unmittelbaren Kontakt zwischen der Innenschale 2 und den Isolierschalen 10 bzw. der Außenschale 1 und den Isolierschalen bewirken, möglichst lang bemessen werden können, wodurch der Wärmeübergang minimiert wird. Zu diesem Zweck sind zusätzlich an der Außenschale 1 an den Stellen der Positionierelemente 11 und auch an den Isolierschalen 10 an eben diesen Stellen Aufwölbungen 14, die sich längs der Positionierelemente 11 erstrecken, vorgesehen. Hierdurch gelingt es, trotz eines sehr geringen Abstandes bzw. Spaltes 15 zwischen der Innenschale 2 und der ersten Isolierschale 10 bzw. zwischen den Isolierschalen 10 bzw. zwischen der Außenschale 1 und der ihr benachbarten Isolierschale 10 sehr lange Positionierelemente 11 vorzusehen.

Die Positionierelemente 11 selbst sind jeweils mit einem Ende in Öffnungen 17 von Einsätzen 16, die an der Innenschale 2 bzw. an den Isolierschalen 10 vorgesehen sind, eingeschnappt, und die gegenüberliegenden Enden durchsetzen Öffnungen 17 der Isolierschalen 10 bzw. eine Öffnung 18 eines in der Außenschale 1 vorgesehenen Einsatzes 19, ebenfalls mit Federzungen, wobei kragenförmige Ansätze 20 zur Lagefixierung vorgesehen sind, sodass die Bolzen 11 auch Druckkräfte aufnehmen können.

Die Positionierelemente 11 sind um die Längsachse 6 des Kryobehälters gleichmäßig verteilt angeordnet, wobei gemäß dem in Fig. 1 dargestellten Ausführungsbeispiel (vgl. insbesondere Fig. 3) drei Positionierelemente 11 je Befestigungsebene vorgesehen sind, sodass der Winkelabstand zwischen den benachbarten Positionierelementen 11 um die Längsachse 6 120° beträgt.

Die beiden Teile 10' und 10" der Isolierschalen sind mit einer simplen Steckverbindung 21 verbunden, sodass eine Sicherung der Lage der beiden ineinander gesteckten Teile 10', 10" quer zur Längsachse 6 des Kryobehälters gegeben ist.

Gemäß dem in den Fig. 4 bis 6 dargestellten Ausführungsbeispiel sind die Positionierelemente ebenfalls von Bolzen 11 gebildet, die einerseits mit einem Auge 21 an einem Einsatz 16, der an der Innenschale 2 bzw. an einer Isolierschale 10 befestigt ist, wogegen andererseits das andere Ende jedes Bolzens 11 mit einem Innengewinde 23 versehen ist, in das eine die Isolierschalen 10 an einer Öffnung 17 durchsetzende Schraube 24 eingeschraubt ist. Mit dieser Schraube ist es möglich, in die Bolzen 11 Zugkräfte zwischen den beiden Abstützpunkten jedes Bolzens 11 einzustellen, sodass jeweils zwei Teile 10' und 10" einer Isolierschale 10 gegeneinander gepresst werden.

Gemäß der Ausführungsform nach den Fig. 7 und 8 sind die Bolzen 11 an einem Ende jeweils mit einem selbstsperrenden Sicherungsring 25 an den Isolierschalen 10 fixiert, wobei der Sicherungsring 25 so weit aufgeschoben wird, dass die Bolzen 11 unter Zugspannung stehen.

Fig. 9 zeigt eine Ausführungsform, bei der die Positionierelemente nicht von Bolzen 11 gebildet sind, sondern durch Magnete 26, sodass die die Teile 10', 10" einer Isolierschale 10 gegeneinander pressende Kräfte durch Magnetkräfte erzeugt werden.

Fig. 10 zeigt eine Ausführungsform, bei der die Positionierelemente 27 als Federelemente ausgebildet sind, und zwar als Schraubenfederelemente 27, deren Zentralachsen 28 ähnlich wie die Achsen der Bolzen 11, die in Fig. 1 dargestellt sind, ausgerichtet sind. Gemäß Fig. 10 ist die Isolierschale 10 an der Außenschale 1 abgestützt, weswegen die Federelemente 27 als Druckfedern ausgebildet sind, sodass durch diese die beiden Teile 10' und 10" der Isolierschale 10 gegeneinander pressenden Kräfte bewirkt werden. Bei Befestigung der Isolierschale 10 an der Innenschale 2 sind diese Federelemente 27 als Zugfedern ausgebildet. Selbstverständlich können diese Federelemente 27 ebenfalls in lokalen Ausbuchtungen bzw. Aufwölbungen 14 analog zu Fig. 1 vorgesehen sein. Bei hinreichender Größe dieser Aufwölbungen 14 können die Längsachsen 28 der Federelemente 27 auch normal zur Oberfläche der Isolierschale 10 ausgerichtet sein.

Fig. 11 zeigt eine Verbindung zweier Teile 10' und 10" einer Isolierschale 10, die durch eine Schweißnaht 29 bewerkstelligt ist. Hier könnte auch eine Klebeverbindung vorgesehen sein. Gemäß Fig. 12 ist zum gegeneinander Sichern der Teile 10' und 10" einer Isolierschale 10 eine Hakenverbindung 30 veranschaulicht, die in Fig. 12 im Schnitt und in Fig. 13 in Ansicht gezeigt ist.

In Fig. 14 ist erkennbar, dass die einzelnen Teile 10' und 10" der Isolierschalen sich über einen Teil des Umfangs erstreckende Erhöhungen 31 aufweisen, die zueinander bezüglich des Umfangs versetzt angeordnet sind. Die Erhöhung 31 des äußersten unteren Teiles 10' einer äußersten Isolierschale 10 ist beispielsweise gegenüber der Erhöhung 31 des nächsten Teiles 10' der benachbarten Isolierschale 10 nach links versetzt usw. Die Erhöhung 31 des innersten Teiles 10' der unteren Isolierschale ist am weitesten nach rechts versetzt. So ist immer zumindest ein Teilabschnitt jeder Erhöhung 31 unverdeckt.

Auf diese Weise ist es möglich, die einzelnen Isolierschalen 10 mit speziell dafür ausgestalteten Werkzeugen zu ergreifen und in die richtige Position zueinander zu bringen, um die Verbindung zwischen den oberen und den korrespondierenden unteren Teilen 10' und 10" herzustellen und den Zusammensetzvorgang zu erleichtern. Die nach außen abragenden Kanten 32 bieten ebenfalls Angriffsflächen für die Werkzeuge.

Es ist auch möglich, anstelle der Erhöhungen 31 andere Mittel vorzusehen, beispielsweise miteinander in Wirkverbindung tretende Zapfen und Buchsen oder Nuten und Federn.

Wie aus Fig. 15 zu erkennen ist, sind bei einer Ausführungsform ähnlich wie sie in Fig. 5 dargestellt ist, zwischen den Köpfen der Schrauben 24 und den Aufwölbungen 14 Tellerfedern 33 vorgesehen, die es ermöglichen, bei der Montage einer Isolierschale 10, d.h. zwischen deren beiden Hälften 10' und 10", eine Vorspannung einstellen zu können. Weiters ermöglichen die Tellerfedern 33, die im Betrieb durch das Abkühlen und Erwärmen unterschiedlicher Schichten auftretenden Wärmeausdehnungen aufzufangen.

Gemäß Fig. 16 ist die Verwendung von Schraubenfedern 27 als Positionierelemente im Detail dargestellt, wobei die einzelnen Schraubenfedern 27 der Mehrzahl der Isolierschalen 10 zueinander fluchtend vorgesehen sind. Die Isolierschalen 10 weisen zentrisch zu den Achsen 28 der Schraubenfedern 27 Zugriffsöffnungen 34 auf. Jede der Schraubenfedern 27 liegt mit einem Ende an der Aufwölbung 14 einer Isolierschale 10 über eine Spannscheibe 35 (vgl. Fig. 17) an, die mit einem Greifteil 36 versehen ist. Dieser ermöglicht es, beim Zusammenbau der Isolierschalen 10 die Schraubenfedern 27 mittels eines von außen, d.h. durch die Zugriffsöffnungen 34, einsetzbaren Hakens zu komprimieren, sodass die nächste Isolierschale 10 eingebaut werden kann, worauf die komprimierte Schraubenfeder 27 durch Zurückziehen des Hakens wieder freigegeben wird und die Schraubenfeder 27 die in Fig. 16 dargestellte Lage einnehmen kann. Die Außenschale 1 weist ebenfalls eine Zugriffsöffnung auf, die mit einem Deckel 37 verschließbar ist.

Fig. 18 zeigt einen Schnitt gemäß der Linie XVIII-XVIII der Fig. 19 und Fig. 19 einen Schnitt gemäß der Linie XIX-XIX der Fig. 18.

In den Figuren 18 und 19 ist ein Behälter zur Aufnahme einer Magnetspule 38 gezeigt, wobei die Magnetspule in einer Innenschale 2, die mit Helium gefüllt ist, angeordnet ist. Diese Innenschale 2 ist über Befestigungselemente 3 mit der Außenschale 1 lagestabil verbunden. Zwischen der Innenschale 2 und der Außenschale 1 ist eine Isolierschale 10 vorgesehen, die mit als Federelementen 27 ausgebildeten Positionierelementen an der Außenschale 1 befestigt ist. Sowohl die Innenschale 2 als auch die Außenschale 1 und auch die Isolierschale 10 sind als Toruskörper ausgebildet.

In den Fig. 20 und 21 ist analog zu den Fig. 18 und 19 eine Variante dargestellt, in der eine Magnetspule 38 trocken, d.h. ohne Heliumbehälter, von einer Isolierschale 10 umgeben ist, welche Isolierschale 10 innerhalb einer Außenschale 1 vorgesehen ist. In diesem Fall ist die Magnetspule 38 selbst mittels Befestigungselementen 3 an der Außenschale 1 befestigt, wobei die Isolierschale 10 wiederum über als Federelemente 27 ausgebildete Positionierelemente an der Außenschale 1 lagefixiert ist.

Selbstverständlich kann in einem erfindungsgemäßen Behälter jede Art von zu kühlenden oder kaltzuhaltenden Geräten vorgesehen sein, wobei dann zweckmäßig das Gerät selbst mittels Befestigungselementen an der Außenschale befestigt ist, sodass in diesem Fall keine Innenschale erforderlich ist, es sei denn, dass das Gerät selbst von einer kryogenen Flüssigkeit umgeben sein muss, in welchem Fall das Gerät in einer Innenschale vorgesehen ist, wobei dann die Innenschale mittels Befestigungselementen an der Außenschale lagestabil angeordnet ist.

Somit eignet sich der erfindungsgemäße Behälter zum Aufbewahren von Supraleitern, von Baueinheiten von Kühlaggregaten, zur Aufbewahrung empfindlicher elektronischer Schaltkreise, für Kryopumpen, für beliebige Materialproben, wie organische Substanzen, beispielsweise bei tiefen Temperaturen aufzubewahrende Samen, Eizellen, etc.

Die Erfindung beschränkt sich nicht auf die in den Figuren beschränkten Ausführungsbeispiele, sondern sie kann in verschiedener Hinsicht modifiziert werden. Beispielsweise ist es möglich, wie bereits angedeutet, eine beliebige Anzahl von Isolierschalen 10 vorzusehen, um den unterschiedlichen Anforderungen an Temperaturisolierung zu genügen.

Die Isolierschalen können auch aus mehreren Teilen aufgebaut sein, wobei Teilstücke auch entlang anderer Achsen als der Hauptaufschiebeachsen der Endstücke (Klöpperböden oder Teile der Isolierschalen, wo die Positionierelemente befestigt werden) der Isolierschalen aufgeschoben werden können. Entweder werden diese Teile verklebt, verschweißt oder über Haken gesichert, oder durch Steckverbindungen über die die beiden Endteile gegeneinander sichernden Kräfte gegeneinander gesichert.

Bezüglich der Anzahl der Positionierelemente hat der Fachmann freie Wahl. So kann es erforderlich sein, bei besonderen Anforderungen an die Stabilität, z.B. für den Einsatz eines Kryotanks in schweren Baugeräten, mehr als drei Positionierelemente 11 je Befestigungsebene anzuordnen. Zur Stabilisierung einer Isolierschale 10 kann es vorteilhaft sein, zumindest ein Positionierelement 11 bei Blickrichtung in Richtung der Längsachse 6 anders als radialsymmetrisch anzuordnen. Als Positionierelemente könnten auch an der Isolierschale bzw. an der Innen- und/oder Außenschale angeklebte oder mit ihr integral ausgebildete Bügelelemente oder Schlaufen Verwendung finden. Wesentlich ist, dass kein direkter Kontakt der Schalen wie gemäß der AT 502 191 B1 stattfindet.

In Fig. 22 ist ein Ausschnitt des Oberteils einer ersten Ausführungsform einer Variante eines erfindungsgemäßen Kryobehälters 41 perspektivisch dargestellt. Der Kryobehälter 41 umfasst einen Außenbehälter 42 und einen Innentank 43, wobei der Innentank 43 im Inneren des Außenbehälters 42 angeordnet ist. Der Innentank 43 ist, wie in Fig. 22 ersichtlich, koaxial bezüglich der Längsachse 44 des Kryobehälters 41 und zentral bezüglich eines gemeinsamen Mittelpunktes im Außenbehälter 42 positioniert. Auch eine nicht-koxiale und/oder dezentrale Ausrichtung des Innentanks 43 im Außenbehälter 42 ist möglich und für manche Anwendungen vorteilhaft.

Sowohl der Außenbehälter 42 als auch der Innentank 43 besitzen im Wesentlichen zylindrische Grundform, wobei die Kanten der Ober- und Unterfläche, an denen die Mantelfläche in die Ober- und Unterfläche übergeht, abgerundet ausgebildet sind. Weiters ist beispielsweise eine kugelförmige Ausgestaltung des Kryobehälters möglich oder eine Ausgestaltung in Form eines Ellipsoids.

Der Innentank 43 ist an seinem oberen Ende über erste Befestigungselemente 45a und an seinem unteren Ende über zweite Befestigungselemente 45b, vorzugsweise gleicher Bauart, im Außenbehälter 42 lagestabil aufgehängt bzw. gehalten. Bei den ersten und zweiten Befestigungselementen bzw. Innentankaufhängungen 45a, 45b handelt es sich um verwindungssteife Schlaufen, es können aber auch starre Verstrebungen zum Einsatz gelangen. Die Befestigungselemente 45a, 45b können auch als ineinander verschiebbare bzw. einschiebbare, koaxiale Rohre ausgebildet sein. Die Befestigungselemente 45a, 45b bestehen aus kohlefaserverstärktem Kunststoff CFK.

Es sind jeweils zumindest drei erste Befestigungselemente 45a und zumindest jeweils drei zweite Befestigungselemente 45b an den gegenüberliegenden Seiten des Kryobehälters 41 vorgesehen. Diese sind regelmäßig bezüglich des Umfanges angeordnet, das heißt mit einem Winkelabstand von 120°.

An den Polen des Kryobehälters 41 ist eine obere erste Aufhängung 52a und am unteren Ende eine untere zweite Aufhängung 52b angeordnet und mit dem Außenbehälter 42 fest verbunden. Die obere erste Aufhängung 52a und die untere zweite Aufhängung 52b werden erst als einer der letzten Schritte der Montage fest mit dem Außenbehälter verbunden. An diesen ersten und zweiten Aufhängungen 52a, 52b sind erste und zweite Aufhängungsbolzen 53a und 53b ausgebildet, die sich nach innen nach Richtung des Innentanks 43 erstrecken. Die ersten und zweiten Aufhängungsbolzen 53a und 53b sind verdrehbar ausgebildet, um ein späteres Fixieren der Befestigungselemente 45a, 45b zu ermöglichen. Außerdem wird dadurch Platz gespart.

Auf der Oberfläche des Innentanks 43, und zwar im Bereich des Überganges der Mantelfläche zur Oberfläche bzw. Unterfläche, sind jeweils drei Innentankbolzen 5 1 a, 5 1 b ausgebildet, die von der Oberfläche des Innentanks 43 abragen. Diese ersten und zweiten Innentankbolzen 51 a, 51b sind in Vertiefungen 67 angeordnet und verschwinden in diesen Vertiefungen vollständig. Dadurch wird ein Herunterrutschen der Befestigungselemente 45a, 45b von den Innentankbolzen 51 a, 51 b durch die innerste Isolierschale 47' verhindert, wenn diese sich in ihrer Endposition befindet.

Die Befestigungselemente 45a, 45b erstrecken sich zwischen den ersten bzw. zweiten Innentankbolzen 51 a, 51 b und den ersten bzw. zweiten Aufhängungsbolzen 53a, 53b. Auf diese Weise ist eine lagestabile Aufhängung des Innentanks 43 im Außenbehälter 42 gewährleistet.

Zwischen dem Außenbehälter 42 und dem Innentank 43 ist somit ein evakuierbarer Zwischenraum 46 ausgebildet. In diesem Zwischenraum 46 sind in der Ausführungsform gemäß Fig. 22 sechs einzelne Isolierschalen 47', 47", 47"' etc. angeordnet. Die Isolierschalen 47 sind als Strahlungsschilde ausgebildet, dienen der besseren Wärmeisolierung und bestehen aus einem Material mit günstigen Eigenschaften hinsichtlich der Wärmeübertragung durch Strahlung, beispielsweise Aluminium oder Kupfer. Auch metallisch beschichtete Kunststofffolien, beispielsweise mit Aluminium, Kupfer oder Gold etc. in einer Dicke zwischen 100 und 500 Å beschichtete Folien, sind einsetzbar.

Die Isolierschalen 47 umgeben den Innentank 43 zwiebelschalenförmig und verlaufen größtenteils parallel zueinander. Der Abstand zwischen den einzelnen Isolierschalen 47 beträgt im Bereich der Mantelfläche und im Bereich der Pole des Kryobehälters 41 ungefähr 1 bis 10 mm und sollte so gering wie möglich gehalten werden. Die einzelnen Isolierschalen 47 berühren sich nicht und liegen nicht aneinander. Sie sind vielmehr völlig voneinander beabstandet und lediglich über die später beschriebenen Aufhängungsgurte 48a, 48b miteinander verbunden.

In Fig. 23 ist eine Detailansicht der Oberseite des Kryobehälters 41 dargestellt. Erkennbar ist ein erster Aufhängungsbolzen 53a, von dem ausgehend sich ein erstes Befestigungselement 45a nach unten in Richtung eines ersten Innentankbolzens 51 a erstreckt. Gut erkennbar sind auch die im Bereich des oberen Poles des Kryobehälters 41 verlaufenden sechs unterschiedlich großen Isolierschalen, wobei die innerste Isolierschale 47' dem Innentank 43 am nächsten liegt und die äußerste Isolierschale 47""" dem Außenbehälter 42 am nächsten liegt.

Die Befestigungselemente 45a, 45b sind radial ausgerichtet bzw. schneiden sich in ihrer virtuellen Verlängerung in der Längsachse 44 des Kryobehälters 41.

Der Kryobehälter 41 bzw. der Außenbehälter 42 weist eine gewisse Anzahl von Auswölbungen 49 auf, die an der Ober- und an der Unterseite ausgebildet sind. Diese Auswölbungen 49 liegen im Bereich der Innentankbolzen 51 und der Aufhängungsbolzen 53 und erstrecken sich radial nach außen. Innerhalb dieser Auswölbungen 49 sind die später beschriebenen Aufhängungsgurte 48a, 48b sowie auch die Befestigungselemente 45a, 45b angeordnet, wodurch im Bereich dieser Auswölbungen 49 die einzelnen Isolierschalen 47 miteinander bzw. mit dem Außenbehälter 42 oder dem Innentank 43 verbunden sind. Jede einzelne Isolierschale und auch der Außenbehälter 42 weisen derartige Auswölbungen 49 auf, wobei die Auswölbungen 49 im Außenbehälter 42 entsprechend am größten ausgebildet sind, und die Auswölbungen 49 der einzelnen Isolierschalen 47 nach innen zu immer kleiner werden.

Die Auswölbungen 49 dienen einerseits zur Unterbringung der möglichst lang zu gestaltenden Verbindungsmittel in Form der später beschriebenen Aufhängungsgurte 48a, 48b. Außerdem dienen die Auswölbungen zur Verbesserung der strukturellen Integrität sowie der Stabilität bzw. der Steifigkeit der Isolierschalen 47 und des Außenbehälters 42.

In Fig. 24 ist eine derartige Auswölbung 49 in Detailansicht dargestellt. Erkennbar ist ein erstes Befestigungselement 45a, das ausgehend vom Aufhängungsbolzen 53a zum ersten Innentankbolzen 51 a gespannt ist. Das Befestigungselement 45a ist in Form einer Schlaufe ausgebildet, die über die Bolzen 51a, 53a gesteckt werden kann.

Die Befestigungselemente 45a, 45b verlaufen dabei durch Aussparungen 68, die in jeder Isolierschale 47 ausgebildet sind. Die Aussparungen 68 sind aus Isolationsgründen vorteilhafterweise möglichst klein dimensioniert. Die Aussparungen 68 der einzelnen Isolierschalen 47 liegen in einer geraden Linie zueinander und sind fluchtend angeordnet. Die Aussparungen 68 können zwischen der Oberseite und der Unterseite des Kryobehälters 41 unterschiedlich groß ausgebildet sein, abhängig von dem Montageverfahren des Kryobehälters 41. So sind die Aussparungen 68 für die Durchführung der im Verfahren später montierten zweiten Befestigungselemente 45b größer als die Aussparungen 68 für die Durchführung der ersten Befestigungselemente 45a, die zuerst montiert werden.

In Fig. 24 ist ein Schnitt durch eine Auswölbung 49 dargestellt, wobei die oben liegende Wand des Außenbehälters 42 erkennbar ist sowie die darunter angeordneten, im Wesentlichen parallel zueinander verlaufenden einzelnen Isolierschalen 47""" bis 47'. Im hinteren Bereich der Auswölbung 49 in Fig. 24 sind die Verbindungsmittel dargestellt, auf die im Folgenden detaillierter eingegangen werden wird.

Wie bereits angedeutet, sind die einzelnen Isolierschalen 47 entweder an der Innenseite des Außenbehälters 42 befestigt, oder bei einer alternativen Ausführungsform an der Außenseite des Innentanks 43. Die Befestigung der Isolierschalen 47 erfolgt über Aufhängungsgurte bzw. -bänder 48a, 48b, die im Randbereich bzw. Übergangsbereich der Oberseite und der Unterseite zur Mantelfläche vorgesehen sind. An jeder Seite sind somit jeweils zumindest 3 grundsätzlich gleichmäßig voneinander beabstandete erste und zweite Aufhängungsgurte 48a, 48b vorgesehen. Diese Aufhängungsgurte bzw. -bänder 48a, 48b bestehen aus einem flexiblen biegsamen Material mit großer Zugfestigkeit und geringer Wärmeleitfähigkeit, vorzugsweise aus Kohlefaser ohne Matrix.

Fig. 25 zeigt eine Detailansicht eines Schnittes durch eine Auswölbung 49, beispielsweise aus Fig. 24, bei einer ersten Ausführungsform eines Kryobehälters 41. Man sieht, dass ein erster Aufhängungsgurt 48a schlangen- bzw. mäanderformig zwischen dem Außenbehälter 42 und der innersten Isolierschale 47' gelegt ist. Jede Isolierschale 47 weist eine in einer Linie angeordnete vordere Ausnehmung 70, eine mittlere Ausnehmung 71 und eine hintere Ausnehmung 72 auf, durch die der Aufhängungsgurt 48a geführt ist. Fixiert ist der Aufhängungsgurt 48a über Klemmeinrichtungen 61, 63. Die Umlenkung erfolgt über gerundete Umlenkelemente 60 bzw. gerundete Kanten der Klemmvorrichtungen 61.

Die Aufhängungsgurte 48a, 48b sind vorteilhafterweise möglichst lang ausgebildet, wodurch eine geringere Wärmeableitung resultiert.

Wie aus Fig. 25 ersichtlich, ist der erste Aufhängungsgurt 48a über eine äußere Befestigungseinrichtung 65 mit dem Außenbehälter 42 fix verbunden. Der erste Aufhängungsgurt 48a erstreckt sich von dieser äußeren Befestigungseinrichtung 65 zur vorderen Ausnehmung 70""" hin und ist durch diese durchgeführt. Über das Umlenkelement 60""" wird der Aufhängungsgurt 48a um etwas mehr als 180° umgelenkt. Das Umlenkelement 60""" ist als Rohrstückelement ausgebildet, das einen axialen Längsschnitt aufweist. Mit diesem Längsschnitt ist es von der vorderen Ausnehmung 70""" ausgehend auf die äußerste Isolierschale 47""" aufgeschoben bzw. aufgesteckt. Die dem Längsschlitz gegenüberliegende Seite des Rohrstückelementes erstreckt sich durch die vordere Ausnehmung 70""" hindurch. Weiters verläuft der Aufhängungsgurt durch die mittlere Ausnehmung 71""" hindurch und wieder auf die äußere, dem Außenbehälter 42 zugewendeten Seite der äußersten Isolierschale 47""" zurück. Im Bereich hinter der mittleren Ausnehmung 71""" ist eine Klemmvorrichtung 61""", 63""" an der äußersten Isolierschale 47""" angeordnet. Diese Klemmvorrichtung besteht aus einem im Wesentlichen länglichen rechteckigen Plättchen 61""" sowie einem Klemmbügel 63""". Der Aufhängungsgurt 48a ist zwischen dem Plättchen 61 """ und dem Klemmbügel 63""" fixiert und somit unbeweglich an der äußersten Isolierschale 47""" befestigt. Weiters erstreckt sich der Aufhängungsgurt 48a durch die hintere Ausnehmung 72""" hindurch in Richtung der nächstinneren Isolierschale 47""' und ist um eine gerundete Kante des länglichen Klemmelementes 61""" herum um etwa 160 bis 170° umgelenkt. Anschließend verläuft der Aufhängungsgurt 48a in Richtung zur vorderen Ausnehmung 70""' bzw. zum Umlenkelement 60""' der nächstinneren Isolierschale 47""'. Auf diese Weise setzt sich der Weg des Aufhängungsgurtes 48a durch alle Isolierschalen 47""" bis 47' fort in Richtung des Innentanks 43.

Die Aufhängungsgurte 48a, 48b sind derart mäanderformig gelegt, dass dadurch eine die Isolierschalen 47 zusammendrückende Kraftkomponente auftritt. Die Richtung der Aufhängungsgurte bzw. -bänder 48a, 48b erzeugt eine Kraftkomponente, die die jeweils gegenüberliegenden korrespondierenden Isolierschalen 47a, 47b zusammendrückt, wodurch bei Befestigung der Aufhängungsgurte bzw. -bänder 48a, 48b am Außenbehälter 42 ein Anheben der Isolierschalen erlaubt wird.

Eine weitere Ausführungsform eines alternativen Kryobehälters 41 ist in den Fig. 26 und 27 gezeigt. Bei dieser Ausführungsform sind die Isolierschalen 47 im Unterschied zur Ausführungsform nach Fig. 22 nicht an dem Außenbehälter 42 befestigt, sondern nur am Innentank 43.

In Fig. 26 ist ein Detailausschnitt eines oberen Abschnittes eines Kryobehälters 41 gezeigt, der einen Schnitt durch eine Auswölbung 49 zeigt. Erkennbar ist ein Aufhängungsbolzen 53a, von dem ausgehend sich ein erstes Befestigungselement 45a in Richtung eines Innentankbolzens 51a erstreckt. Der Innentankbolzen 51a liegt in einer Vertiefung 67. Der dargestellte Kryobehälter 41 weist ebenfalls sechs Isolierschalen 47a' bis 47a""" auf. Ganz außen ist die Wandung des Außenbehälters 42 angeordnet.

In Fig. 27 ist eine vergrößerte Darstellung der Verbindungsmittel der einzelnen Isolierschalen 47 erkennbar. Der erste Aufhängungsgurt 48a ist mit einer inneren Befestigungseinrichtung 66 am Innentank 43 fix befestigt. Die innere Befestigungseinrichtung 66 liegt ebenfalls innerhalb der Vertiefung 67 in radialer Verlängerung zum Innentankbolzen 51a. Ausgehend von dieser inneren Befestigungseinrichtung 66 erstreckt sich der Aufhängungsgurt 48a zur hinteren Ausnehmung 72' der innersten Isolierschale 47'. Der Aufhängungsgurt 48a ist durch diese hintere Ausnehmung 72' durchgeführt und um etwa 160 bis 170° umgelenkt. Direkt hinter dieser hinteren Ausnehmung 72' ist eine Klemmvorrichtung 61', 63' vorgesehen, wobei der Aufhängungsgurt 48a um eine gerundete Endkante des Klemmplättchens 61' umgelenkt ist. Der Aufhängungsgurt 48a ist in dieser Klemmvorrichtung 61', 63' mit der innersten Isolierschale 47' fest verbunden und an dieser fixiert. Der Aufhängungsgurt 48a verläuft weiters durch die mittlere Ausnehmung 71' wieder zurück auf die dem Innentank 43 zugewendete innere Seite der innersten Isolierschale 47'. Anschließend verläuft er um das Umlenkelement 60', das auf der innersten Isolierschale 47' befestigt ist, herum und wird dadurch um etwa 180° umgelenkt und durch die vordere Ausnehmung 70' durchgeführt. Weiters verläuft der Aufhängungsgurt 48a in Richtung zur hinteren Ausnehmung 72" der nächstäußeren Isolierschale 47". Auf diese Weise schlängelt sich der Aufhängungsgurt 48a mäanderförmig von innen nach außen durch alle Isolierschalen 47 durch und fixiert diese in ihren jeweiligen Positionen zueinander und zum Innentank 43. Der Aufhängungsgurt 48a ist an der Klemmvorrichtung 61""", 63""" der äußersten Isolierschale 47""" endfixiert und endet dort. Es besteht keine Verbindung zum Außenbehälter 42.

Erkennbar ist in den vorangegangenen Figuren, dass zwischen den Befestigungselementen 45a, 45b und den Aufhängungsgurten 48a, 48b weder eine mechanische Verbindung noch eine Wirkverbindung anderer Art besteht. Die beiden Elemente sind voneinander unabhängige Elemente und mechanisch voneinander getrennt.

In den Fig. 31 und 32 wird dargestellt, dass der Kryobehälter 41 bzw. der Außenbehälter 42 bzw. die Isolierschalen 47 aus mindestens zwei zusammensetzbaren Einzelelementen aufgebaut sind. In Fig. 32 sind beispielsweise die unteren Teilschalen 47b dargestellt. Ein derartiger Kryobehälter 41 setzt sich dabei aus oberen Teil- bzw. Halbschalen 47a und unteren Teil- bzw. Halbschalen 47b zusammen, wobei auch der Außenbehälter 42 eine obere Hälfte 42a und eine untere Hälfte 42b aufweist. Bei der Montage werden diese Einzelelemente bzw. Teilschalen 47a, 47b, beispielsweise über Steck- oder Rastverbindungen 80, miteinander verbunden und/oder gegebenenfalls verklebt.

In den Fig. 31 und 32 ist die Zusammensetzung der einzelnen Teilschalen 47a, 47b detailliert dargestellt. In Fig. 32 ist eine Steck- oder Rastverbindung 80 detailliert dargestellt. Zwei obere erste Teilschalen 47a' und 47a" sind bereits mit zwei unteren zweiten Teilschalen 47b', 47b" verbunden, die weiteren zweiten unteren Teilschalen 47b"' bis 47b""" sind noch unverbunden bzw. frei.
Jede zweite bzw. untere Teilschale 47b weist mehrere regelmäßig entlang ihres Umfangs verteilte, im wesentlichen rechteckige, an die Krümmung der zweiten Teilschale 47b angepasste untere zweite Positioniermittel in Form von Erhöhungen 81 b auf. Diese Erhöhungen 81b besitzen jeweils eine nach außen schräg nach oben abragende untere Kante 82b. Jede erste bzw. obere Teilschale 47a weist ebenfalls mehrere regelmäßig entlang des Umfangs verteilte, im wesentlichen rechteckige, obere erste Positioniermittel in Form von Erhöhungen 81 a auf, die in ihren Dimensionen und ihrer Aufteilung bzw. relativen Positionierung zueinander den unteren Erhöhungen 81b entsprechen bzw. zugeordnet sind. Die oberen Erhöhungen 81a besitzen ebenfalls jeweils eine nach außen schräg nach unten abragende Kante 82a.

Wie in Fig. 31 ersichtlich, liegen die Erhöhungen 81a, 81b bei der Montage einander gegenüber. Der Zusammenbau bzw. die Verbindung der beiden Teilschalen 47a, 47b erfolgt durch Einschieben der oberen Teilschale 47a in die untere Teilschale 47b. Die nach außen abragenden unteren Kanten 82b machen dabei den zur Verbindung erforderlichen Einführvorgang möglich.

Die unteren Teilschalen 47b weisen weiters eine durchgehende, parallel und beabstandet zur Endkante umlaufende Rastschiene 83 auf, in die die nach außen abragende Kante 82a der entsprechenden oberen Teilschale 47a eingreift und darin kraftschlüssig auf Zug und Druck gehalten wird.

In Fig. 31 und in Fig. 32 ist erkennbar, dass die einzelnen Teilschalen 47a, 47b bzw. die Erhöhungen 81a, 81b der einzelnen Teilschalen 47a, 47b zueinander versetzt bezüglich des Umfanges angeordnet sind. Die Erhöhung 81b""" der äußersten unteren Teilschale 47b""" ist beispielsweise gegenüber der Erhöhung 81b""' der nächsten Teilschale 47b""' nach links versetzt usw.. Die Erhöhung 81b' der innersten unteren Teilschale 47b' ist am weitesten nach rechts versetzt. Auf diese Weise ist immer zumindest ein Teilabschnitt jeder Erhöhung 81 unverdeckt.

Auf diese Weise ist es möglich, die einzelnen Isolierschalen 47a, 47b mit speziell dafür ausgestalteten Werkzeugen zu ergreifen und in die richtige Position zueinander zu bringen, um die Verbindung zwischen den oberen und den korrespondierenden unteren Teilschalen herzustellen und den Einschiebevorgang zu erleichtern. Die nach außen abragenden Kanten 82a, 82b bieten ebenfalls Angriffsflächen für die Werkzeuge.

Es ist auch möglich die Positioniermittel 81 anders auszugestalten, beispielsweise als miteinander in Wirkverbindung tretende Zapfen und Buchsen oder Nuten und Federn.

In den Teilschalen 47a, 47b und im Außenbehälter 42 sind zusätzlich nicht abgebildete Durchführungen für Rohrleitungen zum Innentank 43 vorgesehen. Diese können beispielsweise entlang oder parallel der Längsachse 44 angeordnet sein.

Gemäß den Fig. 33 und 34 weist ein Isolierschale eine Ausnehmung 100 auf, die ein Überschieben der Teile 47a' und 47b' der Isolierschale über die mittels der Befestigungselemente 45a bzw. 45b an der Innenschale 43 befestigte Aufhängung 52a bzw. 52b gestattet, die eine lagestabile Befestigung der Innenschale 43 an der Außenschale 42 sichert.

Diese Ausnehmung 100 wird nach Überschieben der Isolierschale mit einem Deckel 58b' verschlossen.

Nachfolgend ist der Aufbau und ein Verfahren zur Zusammensetzung der ersten Ausführungsform des Kryobehälters 41, wie dargestellt in Fig.22, beschrieben, wobei die drei Isolierschalen 47', 47" und 47"' am Außenbehälter 42 befestigt sind:

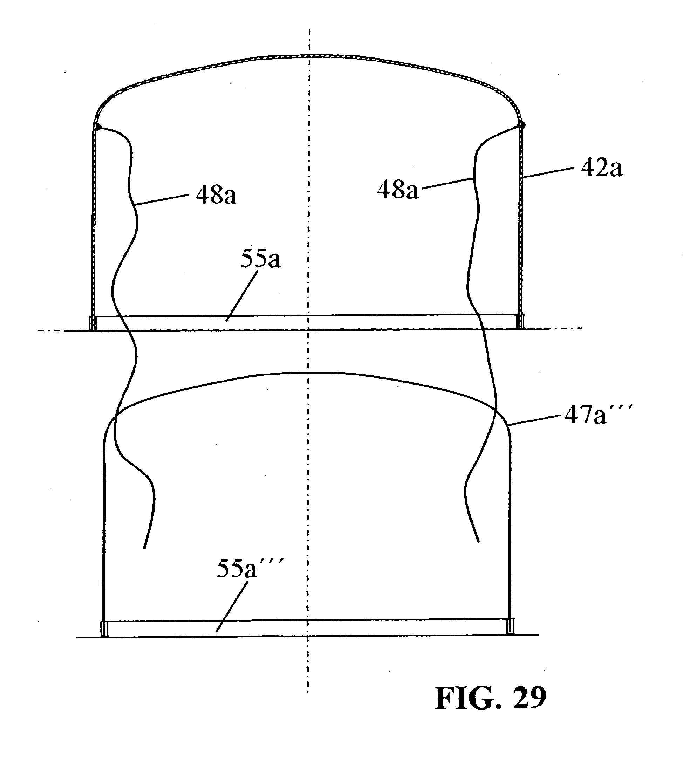

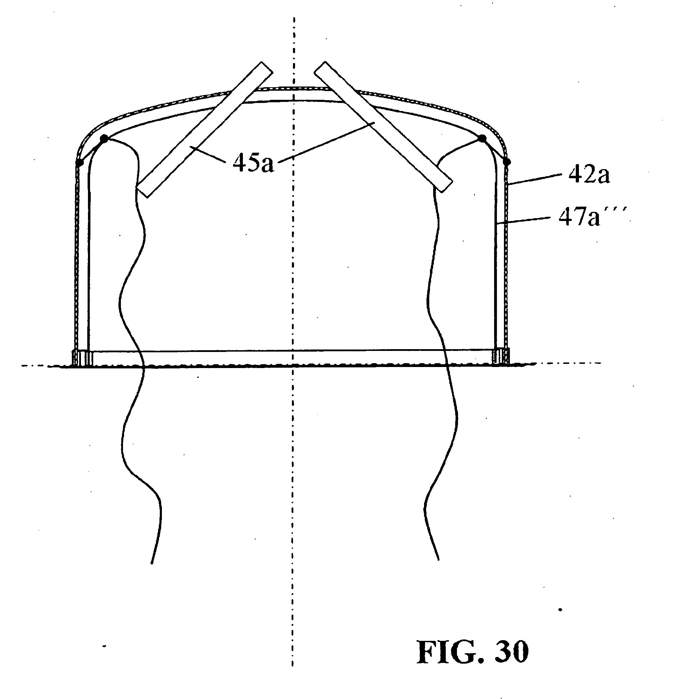

Das Verfahren umfasst folgende Schritte, wobei die einzelnen Schritte auch gleichzeitig oder in leicht veränderter Reihenfolge ausgeführt werden können:
a) Befestigung eines ersten Außenbehälterteils 42a mittels eines ersten äußersten Positionierringes 55a in einer Position, dass die Öffnung des ersten Außenbehälterteils 42a nach unten zeigt (Fig. 29),
b) Einhängen der drei ersten Aufhängungsgurte 48a an der Innenseite des ersten Außenbehälterteils 42a an den dafür vorgesehenen Punkten, nämlich den äußeren Befestigungseinrichtungen 65 (Fig. 29),
c) Vorpositionierung der ersten äußersten Teilschale 47a"' mittels eines ersten weiteren Positionierrings 55a"' vor, aber noch außerhalb der Öffnung des ersten Außenbehälterteils 42a, derart, dass die Öffnung der ersten äußersten Teilschale 47a"' in die gleich Richtung wie die Öffnung des ersten Außenbehälterteils 42a zeigt (Fig. 29),
d) Durchfädeln der ersten Aufhängungsgurte 48a durch die Ausnehmungen 70, 71, 72 bzw. um die Klemmeinrichtungen 61, 63 bzw. das Umlenkelement 60 der ersten Teilschale 47a"' (Fig. 29).
e) Einführen in den und Befestigen der ersten äußersten Teilschale 47a"' im ersten Außenbehälterteil 42a mittels der jeweiligen Positionierringe 55a"' und 55a (Fig. 30). Die Positionierringe 55 werden miteinander mit einer lösbaren Verbindung verbunden.
f) Durchfädeln der drei ersten oberen Befestigungselemente 45a durch die Schlitze bzw. Aussparungen 68 in der ersten äußersten Teilschale 47a"' (Fig. 30). Diese hängen dort vorerst lose. Die Schritte d), e) und f) werden gleichzeitig oder in beliebiger Reihenfolge durchgeführt.
g) Anlegen einer Vorspannung an die ersten Aufhängungsgurte 48a (Fig. 30)
h) Fixierung der ersten Aufhängungsgurte 48a mit den ersten Klemmvorrichtungen 61, 63 (Fig. 30). Die Aufhängungsgurte 48a erzeugen dabei eine Kraft, die die erste äußerste Teilschale 47a"' nach unten aus dem ersten Außenbehälterteil 42a hinaus drückt. Diese Kraft wird durch die Positionierringe bzw. durch die Arretierung zwischen den beiden Positionierringen aufgenommen.
i) Einsetzen von zwei weiteren ersten Teilschalen 47a", 47a',... durch analoge Wiederholung der Schritte c) bis h),
j) Kürzung der ersten Aufhängungsgurte 48a nach Montage der innersten Teilschale 47a'. Somit ist eine Hälfte des Kryobehälters 41 fertiggestellt. Die Anordnung wird durch die Positionierringe 55 gehalten.
k) Einsetzen des Innentanks 43 durch Einführen in die Öffnung der innersten ersten Teilschale 47a',
l) Umhängen der ersten Befestigungselemente 45a um erste Innentankbolzen 51a des Innentanks 43, sobald der Innentank 43 nahe genug ist. Dies ist durch die noch ausreichende Länge der Schlaufen 45a möglich, da diese noch nicht um die Aufhängungsbolzen 53a gelegt sind. Die Schritte k) und 1) können gleichzeitig oder in beliebiger Reihenfolge durchgeführt werden.
m) Montage einer ersten Aufhängung 52a an der Außenseite des ersten Außenbehälterteils 42a,
n) Befestigung der ersten Befestigungselemente 45a an ersten Aufhängungsbolzen 53a der ersten Aufhängung 52a und Fixierung durch Verdrehen der ersten Aufhängungsbolzen 53a. Somit hängt der Innentank 43 an der ersten Aufhängung 52a.
o) Zusammensetzung des zweiten Teiles der Umhüllung des Innentanks 43 durch analoge Wiederholung der Montageschritte a) bis j) für die drei zweiten Teilschalen 47b', 47b", 47b"' bzw. den zweiten Außenbehälterteil 42b. Dadurch entsteht eine Anordnung umfassend den zweiten Außenbehälterteil 42b und die miteinander und mit dem zweiten Außenbehälterteil 42b verbundenen drei zweiten Teilschalen 47b', 47b", 47b"'.
p) Entfernen aller zweiten Positionierringe 55b des zweiten Teiles der Umhüllung und Aufschieben des zweiten Teiles der Umhüllung mit der innersten zweiten Teilschale 47b' von unten über das von Teilschalen noch freie Ende des Innentanks 43. Diese zweite Umhüllungsanordnung wird nach ihrer Montage auf den Kopf gestellt, um sie von unten über den Innentank 43 schieben zu können.
q) Entfernung des innersten ersten Positionierrings 55a' der innersten ersten Teilschale 47a', wodurch sich diese absenkt und auf der der ersten Aufhängung 52a nahen Seite des Innentanks 43 aufliegt,
r) Anheben der innersten zweiten Teilschale 47b' und Verbinden der innersten ersten Teilschale 47a' mit der innersten zweiten Teilschale 47b' durch eine Rast- oder Steckverbindung 80. Diese Steckverbindung muss stark genug dimensioniert sein, um das Gewicht der unteren innersten zweiten Teilschale 47b' während des Montagevorganges zu tragen. Die untere innerste zweite Teilschale 47b' lässt sich anheben, weil die Aufhängungsgurte 48b flexibel ausgerührt sind.
s) Befestigung der zweiten Befestigungselemente 45b an den zweiten Innentankbolzen 51 b des Innentanks 43 während des Anhebens. Ein Herunterrutschen der Befestigungselemente 45a, 45b wird durch die innerste Teilschale 47a' und 47b' verhindert, sobald diese in Endposition ist. Die Schritte r) und s) können gleichzeitig oder in beliebiger Reihenfolge durchgeführt werden.
t) Montage der beiden weiteren Teilschalen 47b", 47b"' durch analoge Wiederholung der Schritte q) bis r). Die erste Teilschale 47a" senkt sich nach Entfernung des Positionierringes 55a" ab, bis die Aufhängungsgurte 48a gestreckt sind.
u) Montage des zweiten Außenbehälterteils 42b und Verschweißen des ersten Außenbehälterteils 42a mit dem zweiten Außenbehälterteil 42b.
v) Ansetzen einer zweiten Aufhängung 52b an der Außenseite des zweiten Außenbehälterteils 42b an einer der ersten Aufhängung 52a gegenüberliegenden Position.
w) Anlegen der zweiten Befestigungselemente 45b an den zweiten Aufhängungsbolzen 53b und gegebenenfalls Fixierung durch Verdrehen der zweiten Aufhängungsbolzen 53b.
x) Einstellung der gewünschten Vorspannung in den Befestigungselementen 45 durch Ziehen an den Aufhängungen 52.
y) Verschweißen der beiden Aufhängungen 52 mit dem Außenbehälter 42.
z) Anbringung eines Deckels zur vakuumdichten Abdeckung der Aufhängungen 52.

Alternativ dazu können die Aufhängungen 52 über jeweils eine Wellenmutter 110 abgestützt sein. In diesem Fall kann der Schritt des Einstellens der Vorspannung und das Verschweißen gleichzeitig erfolgen.

Fig. 35 veranschaulicht die Möglichkeit des Anhebens einer Teilschale gegenüber einer benachbarten Teilschale bzw. gegenüber dem Innentank oder dem Außenbehälter, wodurch die Montage, d.h. der Zusammenbau zweier Teilschalen, wegen besserer Zugänglichkeit wesentlich vereinfacht durchführbar ist.

## Patentansprüche

1. Behälter zur Aufnahme von bei tiefen Temperaturen, vorzugsweise unter 150 Kelvin, aufzubewahrenden kryogenen Medien und/oder Geräten, mit einer Außenschale (1) und einer mit dieser lagestabil über Positionierelemente direkt oder indirekt verbundenen bzw. an dieser direkt oder indirekt abgestützten Isolierschale (10), die gegebenenfalls von einer oder mehreren weiteren Isolierschalen (10) umgeben ist, wobei entweder das Gerät oder eine Innenschale (2) zur Aufbewahrung von kryogenen Medien lagestabil über Befestigungselemente (3) mit der Außenschale (1) verbunden ist, **dadurch gekennzeichnet, dass** jede Isolierschale (10) zumindest zweiteilig ausgebildet ist und an der Außenschale (1) und/oder am Gerät und/oder an der Innenschale (2) mittels von den Befestigungselementen (3) unabhängigen Positionierelementen (11, 26, 27) befestigt ist, wobei die Isolierschale (10) von der Außen- bzw. Innenschale (1, 2) bzw. vom Gerät bzw. von einer weiteren Isolierschale (10) unter Bildung eines Spaltes (15) berührungslos beabstandet ist.

2. Behälter nach Anspruch 1, **dadurch gekennzeichnet, dass** Positionierelemente (11) von Bolzen gebildet sind.

3. Behälter nach Anspruch 1 oder 2, **dadurch gekennzeichnet, dass** Positionierelemente als Federelemente (27), insbesondere als Schraubenfederelemente, ausgebildet sind.

4. Behälter nach einem der Ansprüche 1 bis 3, **dadurch gekennzeichnet, dass** Positionierelemente (11, 26, 27) eine Isolierschale (10) gegen die Innenschale (2) oder gegen die Außenschale (1) spannen und dementsprechend einerseits an der Isolierschale (10) und andererseits an der Innen- bzw. Außenschale (1, 2) abgestützt bzw. verankert sind.

5. Behälter nach einem der Ansprüche 1 bis 4, **dadurch gekennzeichnet, dass** bei Vorhandensein von zwei oder mehreren Isolierschalen (10) Positionierelemente (11, 27) einerseits an einer ersten Isolierschale (10) und andererseits an einer der ersten Isolierschale (10) benachbarten weiteren Isolierschale (10) abgestützt bzw. verankert sind.

6. Behälter nach einem der Ansprüche 1 bis 5, **dadurch gekennzeichnet, dass** die Isolierschalen (10) bzw. die Außenschale (1) an den Stellen, an denen Positionierelemente (11, 26, 27) vorgesehen sind, mit sich längs der Positionierelemente (11, 26, 27) erstreckenden Aufwölbungen (14) zur örtlichen Aufnahme eines Positionierelements (11, 26, 27) versehen sind, wobei Positionierelemente (11, 26, 27) an den Endbereichen der Aufwölbungen (14) abgestützt bzw. verankert sind.

7. Behälter nach einem der Ansprüche 2 bis 6, **dadurch gekennzeichnet, dass** Bolzen (11) einerseits mit einem an einem seiner Enden vorgesehenen Bund und andererseits mit einem selbstsperrenden Sicherungsring (25), der am anderen Ende des Bolzens (11) aufgeschoben ist, am Gerät bzw. an der Innen- bzw. Außenschale (1, 2) bzw. an der Isolierschale (10) abgestützt bzw. verankert sind.

8. Behälter nach einem der Ansprüche 2 bis 7, **dadurch gekennzeichnet, dass** Bolzen (11) mit an ihren Enden vorgesehenen Schnappnasen (13) versehen sind, die zum Einsetzen in Öffnungen (17, 18) und zum Verankern der Bolzen (11) in diesen Öffnungen (17, 18) dienen, wobei die Öffnungen (17, 18) am Gerät bzw. an der Innen- bzw. Außenschale (1, 2) bzw. an einer Isolierschale (10) vorgesehen sind.

9. Behälter nach einem der Ansprüche 2 bis 8, **dadurch gekennzeichnet, dass** Bolzen (11) mit einem Ende mittels einer Schraubverbindung mit dem Gerät bzw. mit der Innen-oder Außenschale (1, 2) oder mit einer Isolierschale (10) verankert sind.

10. Behälter nach einem der Ansprüche 1 bis 9, **dadurch gekennzeichnet, dass** die Längsachse der Positionierelemente (11, 27) zur Oberfläche der Isolierschale (10) bzw. des Gerätes bzw. der Innen- oder Außenschale (1, 2) im Bereich der Befestigung der Positionierelemente (11) geneigt ist.

11. Behälter nach einem der Ansprüche 1 bis 10, **dadurch gekennzeichnet, dass** Positionierelemente von Magneten (26) gebildet sind.

12. Behälter nach einem der Ansprüche 1 bis 11, **dadurch gekennzeichnet, dass** Positionierelemente (11, 26, 27) bezüglich einer Längsachse (6) des Behälters um diese Längsachse (6) herum gleichmäßig verteilt angeordnet sind.

13. Behälter nach Anspruch 12, **dadurch gekennzeichnet, dass** drei Positionierelemente (11, 26, 27) um die Längsachse (6) herum verteilt angeordnet sind.

14. Behälter nach einem der Ansprüche 1 bis 13, **dadurch gekennzeichnet, dass** die Isolierschale (10) bzw. die Isolierschalen (10) jeweils von zwei Halbschalen (10', 10") gebildet ist (sind), welche Halbschalen (10', 10") mittels einer Steckverbindung (21) miteinander zu einer Isolierschale (10) verbindbar sind.

15. Behälter nach Anspruch 14, **dadurch gekennzeichnet, dass** jede der Halbschalen (10', 10") mittels Positionierelementen (11, 27) direkt oder indirekt am Gerät bzw. an der Außen-und/oder Innenschale (1,2) bzw. an einer weiteren Isolierschale (10) befestigt ist.

16. Behälter nach einem der Ansprüche 1 bis 15, **dadurch gekennzeichnet, dass** die Isolierschale(n) mittels Positionierelementen (11, 26, 27) unter Erzeugung von die Teile (10', 10") der Isolierschale(n) (10) gegeneinander sichernden Kräften, hervorgerufen vorzugsweise durch Federn, an der Außen- und/oder der Innenschale befestigt ist (sind).

17. Behälter nach einem der Ansprüche 1 bis 16, **dadurch gekennzeichnet, dass** die Teile (10', 10") einer Isolierschale (10) gegeneinander mittels Haken (30) lagegesichert sind.

18. Behälter nach einem der Ansprüche 1 bis 17, **dadurch gekennzeichnet, dass** die Teile (10', 10") einer Isolierschale (10) miteinander durch eine Klebe- oder Schweißverbindung (29) verbunden sind.

19. Behälter mit einer Mehrzahl von Isolierschalen (10) nach einem der Ansprüche 1 bis 18, **dadurch gekennzeichnet, dass** Positionierelemente als Schraubenfedern (27) ausgebildet sind, wobei die Schraubenfedern (27) zur Abstützung benachbarter Isolierschalen (10) zueinander fluchtend angeordnet sind und die Isolierschalen (10) Zugriffsöffnungen (34) zu den Schraubenfedern (27) aufweisen.

20. Behälter nach einem der Ansprüche 1 bis 19, **dadurch gekennzeichnet, dass** eine Magnetspule über Befestigungselemente (3) mit der Außenschale (1) lagestabil verbunden ist.

21. Kryobehälter nach einem der Ansprüche 1, 4 bis 6 oder 12 bis 18, **dadurch gekennzeichnet, dass** die Isolierschalen (47', 47", 47"',...) über, insbesondere flexible bzw. biegsame, Aufhängungsgurte bzw. -bänder (48a, 48b) sowohl untereinander als auch mit der als Innentank (43) ausgebildeten Isolierschale und/oder der als Außenbehälter (42) ausgebildeten Außenschale verbunden sind.

22. Kryobehälter nach Anspruch 21, **dadurch gekennzeichnet, dass** erste Aufhängungsgurte bzw. -bänder (48a) im Bereich der Oberseite bzw. eines oberen Polbereichs des Innentanks (43) und des Außenbehälters (42), insbesondere im Randbereich bzw. Übergangsbereich der Oberseite zur Mantelfläche, und zweite Aufhängungsgurte bzw. -bänder (48b) im Bereich der gegenüberliegenden Unterseite bzw. eines unteren Polbereichs des Innentanks (43) und des Außenbehälters (42), insbesondere im Randbereich bzw. Übergangsbereich der Unterseite zur Mantelfläche, angeordnet sind.

23. Kryobehälter nach einem der Ansprüche 21 oder 22, **dadurch gekennzeichnet, dass** jeweils zumindest drei, umfänglich gleichmäßig angeordnete, erste und zweite Aufhängungsgurte (48a, 48b) vorgesehen sind.

24. Kryobehälter nach einem der Ansprüche 21 bis 23, **dadurch gekennzeichnet, dass** die Aufhängungsgurte bzw. -bänder (48a, 48b) über äußere Befestigungseinrichtungen (65) direkt an der Innenseite des Außenbehälters (42) befestigt sind und jede Isolierschale (47', 47", 47"',...) lagefest bezüglich des Außenbehälters (42) und den anderen Isolierschalen (47', 47", 47"',...) fixiert ist, wobei der Innentank (43) berührungsfrei von den Aufhängungsgurten bzw. -bändern (48a, 48b) gelagert ist.

25. Kryobehälter nach einem der Ansprüche 21 bis 23, **dadurch gekennzeichnet, dass** die Aufhängungsgurte bzw. -bänder (48a, 48b) über innere Befestigungseinrichtungen (66) direkt an der Außenseite des Innentanks (43) befestigt sind und jede Isolierschale (47', 47", 47"',...) lagefest bezüglich des Innentanks (43) und den anderen Isolierschalen (47', 47", 47"',...) fixiert ist, wobei der Außenbehälter (42) berührungsfrei von den Aufhängungsgurten bzw. -bändern (48a, 48b) gelagert ist.

26. Kryobehälter nach Anspruch 25, **dadurch gekennzeichnet, dass** die inneren Befestigungseinrichtungen (66) in Vertiefungen (67) angeordnet sind.

27. Kryobehälter nach einem der Ansprüche 21 bis 26, **dadurch gekennzeichnet, dass** jede Isolierschale (47', 47", 47"',...) Ausnehmungen (70, 71, 72) aufweist, durch die die Aufhängungsgurte bzw. -bänder (48a, 48b) verlaufen.

28. Kryobehälter nach einem der Ansprüche 21 bis 27, **dadurch gekennzeichnet, dass** die Aufhängungsgurte bzw. -bänder (48a, 48b) von Isolierschale (47'....) zu Isolierschale (47'....) mäanderförmig zwischen den Ausnehmungen (70, 71, 72) der einzelnen Isolierschalen (47'....) verlaufen und dass die Aufhängungsgurte bzw. -bänder (48a, 48b) vorzugsweise Kraftkomponenten erzeugen, die die jeweils gegenüberliegenden korrespondierenden Teilschalen (47a, 47b) zusammendrücken, wodurch bei Befestigung der Aufhängungsgurte bzw. -bänder (48a, 48b) am Außenbehälter (42) ein Anheben der Teilschalen (47a, 47b) erlaubt ist.

29. Kryobehälter nach einem der Ansprüche 21 bis 28, **dadurch gekennzeichnet, dass** die Aufhängungsgurte (48a, 48b) über Klemmvorrichtungen (61, 63) an der jeweiligen Isolierschale (47'....) fixiert sind.

30. Kryobehälter nach einem der Ansprüche 21 bis 29, **dadurch gekennzeichnet, dass** an jeder Isolierschale (47'....) gerundete Umlenkelemente (60) vorgesehen sind, die in den vorderen Ausnehmungen (70) angeordnet sind.

31. Kryobehälter nach einem der Ansprüche 21 bis 30, **dadurch gekennzeichnet, dass** sich jeder Aufhängungsgurt (48a, 48b) ausgehend von der äußeren Befestigungseinrichtung (65) des Außenbehälters (42) zur vorderen Ausnehmung (70""") der äußersten Isolierschale (47""") erstreckt, durch diese vordere Ausnehmung (70""") durchgeführt ist und, insbesondere über das Umlenkelement (60""") der äußersten Isolierschale (47""") um etwa 180° umgelenkt ist, weiters durch die mittlere Ausnehmung (71""") wieder auf die äußere Seite der äußersten Isolierschale (47""") zurückgeführt ist und in der Klemmvorrichtung (61""", 63""") der äußersten Isolierschale (47""") fixiert ist, weiters durch die hintere Ausnehmung (72""") der äußersten Isolierschale (47""") durchgeführt und um etwa 180° umgelenkt ist und in Richtung zur vorderen Ausnehmung (70""') bzw. zum Umlenkelement (60""') der nächstinneren Isolierschale (47""') geführt ist und sich dieser Weg durch alle Isolierschalen (47) nach innen zu fortsetzt, bis der Aufhängungsgurt (48a, 48b) an der Klemmvorrichtung (61', 63') der innersten Isolierschale (47') endet bzw. endfixiert ist.

32. Kryobehälter nach einem der Ansprüche 21 bis 30, **dadurch gekennzeichnet, dass** sich jeder Aufhängungsgurt (48a, 48b) ausgehend von der inneren Befestigungseinrichtung (66) des Innentanks (43) zur hinteren Ausnehmung (72') der innersten Isolierschale (47') erstreckt, durch diese hintere Ausnehmung (72') durchgeführt um etwa 180° umgelenkt ist, in der Klemmvorrichtung (61', 63') der innersten Isolierschale (47') fixiert ist, weiters durch die mittlere Ausnehmung (71') wieder auf die innere Seite der innersten Isolierschale (47') zurückgeführt ist, weiters durch die vordere Ausnehmung (70') durchgeführt ist und, insbesondere über das Umlenkelement (60') der innersten Isolierschale (47'), um etwa 180° umgelenkt ist und in Richtung zur hinteren Ausnehmung (72") der nächstäußeren Isolierschale (47") geführt ist und sich dieser Weg durch alle Isolierschalen (47) nach außen hin fortsetzt, bis der Aufhängungsgurt (48a, 48b) an der Klemmvorrichtung (61""", 63""") der äußersten Isolierschale (47""") endet bzw. endfixiert ist.

33. Kryobehälter nach einem der Ansprüche 21 bis 32, **dadurch gekennzeichnet, dass** die Aufhängungsgurte (48a, 48b), die Befestigungselemente (45a, 45b), die Umlenkelemente (60) und/oder die Klemmvorrichtungen (61, 63) in aus der Oberfläche des Außenbehälters (42) und der Isolierschalen (47) ausgebildeten Auswölbungen (49) angeordnet sind bzw. diese Auswölbungen (49) ausbilden.

34. Kryobehälter nach einem der Ansprüche 21 bis 33, **dadurch gekennzeichnet, dass** der Kryobehälter (41) bzw. der Außenbehälter (42) bzw. die Isolierschalen (47', 47", 47"',...) aus zumindest zwei Einzelelementen zwei- oder mehrteilig, beispielsweise aus einem ersten und einem zweiten Außenbehälterteil (42a, 42b) bzw. aus ersten und zweiten Teilschalen (47a, 47b), ausgebildet sind bzw. aus zusammensteckbaren Einzelelementen bestehen, die im Zuge der Montage zu dem fertigen Kryobehälter (41) assembliert sind.

35. Kryobehälter nach einem der Ansprüche 21 bis 34, **dadurch gekennzeichnet, dass** die Einzelelemente bzw. die ersten und zweiten Teilschalen (47a, 47b) über Steck-, Klebe-, und/oder Rastverbindungen (80) verbindbar sind.

36. Kryobehälter nach einem der Ansprüche 21 bis 35, **dadurch gekennzeichnet, dass** an jeder ersten Teilschale (47a', 47a",...) und an jeder zweiten Teilschale (47b', 47b",...) jeweils mehrere, insbesondere regelmäßig, entlang ihres Randes bzw. Umfangs verteilte Positionierungsmittel (81 a', 81 b', 81 a", 81b",...), beispielsweise im wesentlichen rechteckige an die Krümmung der Teilschalen (47a, 47b) angepasste Erhöhungen oder ineinander eingreifende Zapfen und Buchsen, ausgebildet sind, wobei die Positioniermittel (81a', 81a",...) der ersten Teilschalen (47a', 47a",...) mit den Positioniermitteln (81b', 81b",...) der zweiten Teilschalen (47b', 47b",...), insbesondere über eine Druck- und/oder Zugverbindung, beispielsweise eine Rast- und/oder Klebeverbindung, wirkverbindbar sind und wobei die Positioniermittel (81a', 81a",...) der ersten Teilschalen (47a', 47a",...) zueinander versetzt bezüglich des Umfanges der ersten Teilschalen (47a', 47a",...) angeordnet sind bzw. sich versetzt teilweise überlappen und wobei die Positioniermittel (81b', 81b",...) der zweiten Teilschalen (47b', 47b",...) zueinander versetzt bezüglich des Umfanges der zweiten Teilschalen (47b', 47b",...) angeordnet sind bzw. sich versetzt teilweise überlappen, wobei jeweils Teilabschnitte bzw. Bereiche der Positioniermittel (81 a', 81b', 81a", 81b",...) derart vorstehen bzw. unverdeckt sind, dass sie als Angriffsflächen für entsprechende Montagewerkzeuge beaufschlagbar sind.

37. Kryobehälter nach Anspruch 36, **dadurch gekennzeichnet, dass** die Positioniermittel (81a', 81b', 81a", 81b",...) als im wesentlichen rechteckige, an die Krümmung der Teilschalen (47a, 47b) angepasste Erhöhungen (81a', 81b', 81a", 81b",...) ausgebildet sind, wobei die Erhöhungen (81a', 81b', 81 a", 81b",...) ihrerseits jeweils eine, insbesondere schräg, nach außen abragende Kante (42a, 42b) aufweisen, wobei die einzelnen zweiten Teilschalen (47a) und die jeweils entsprechenden ersten Teilschalen (47b) derart ineinander einschiebbar bzw. miteinander verbindbar sind, dass die Kanten (82) der zweiten Teilschalen (47a) in jeweils eine in jeder ersten Teilschale (47b) ausgebildete Rastschiene (83), oder umgekehrt, kraftschlüssig eingreifen und eine Druck- und/oder Zugverbindung gegeben ist.

38. Kryobehälter nach einem der Ansprüche 21 bis 37, **dadurch gekennzeichnet, dass** in den Teilschalen (47a, 47b) durch, einteilige oder mehrteilige Deckel (58) verschließbare Ausnehmungen (100) ausgebildet sind.

39. Kryobehälter nach einem der Ansprüche 21 bis 38, **dadurch gekennzeichnet, dass** der Zwischenraum (46) frei von Superisolationsschichten, insbesondere MLI-Schichten bzw. Multi Layer Insulation-Schichten, ist.

## Claims

1. A container for receiving cryogenic media and/or devices to be stored at low temperatures, preferably of below 150 kelvin, comprising an outer shell (1) and an insulating shell (10) which in a positionally stable manner via positioning elements is directly or indirectly connected therewith or, respectively, is directly or indirectly supported thereon, and which, optionally, is surrounded by one or several further insulating shells (10), wherein either the device or an inner shell (2) for storing cryogenic media is connected to the outer shell (1) in a positionally stable manner via fastening elements (3), **characterized in that** each insulating shell (10) has at least a two-piece design and is attached to the outer shell (1) and/or to the device and/or to the inner shell (2) via positioning elements (11, 26, 27) which are independent of the fastening elements (3), with the insulating shell (10) being spaced apart in a contactless manner from the outer shell or the inner shell (1, 2) or the device or a further insulating shell (10), respectively, whereby a gap (15) is formed.

2. A container according to claim 1, **characterized in that** positioning elements (11) are formed from bolts.

3. A container according to claim 1 or 2, **characterized in that** positioning elements are designed as spring elements (27), in particular as helical spring elements.

4. A container according to any of claims 1 to 3, **characterized in that** positioning elements (11, 26, 27) clamp an insulating shell (10) against the inner shell (2) or against the outer shell (1) and, accordingly, are supported or anchored, respectively, on the one hand, on the insulating shell (10) and, on the other hand, on the inner shell or outer shell (1,2), respectively.

5. A container according to any of claims 1 to 4, **characterized in that**, if two or more insulating shells (10) are present, positioning elements (11, 27) are supported or anchored, respectively, on the one hand, on a first insulating shell (10) and, on the other hand, on a further insulating shell (10) adjacent to the first insulating shell (10).

6. A container according to any of claims 1 to 5, **characterized in that**, at the locations where positioning elements (11, 26, 27) are provided, the insulating shells (10) or the outer shell (1), respectively, have/has bulges (14) extending alongside the positioning elements (11, 26, 27) for locally receiving a positioning element (11, 26, 27), with positioning elements (11, 26, 27) being supported or anchored, respectively, in the end regions of the bulges (14).

7. A container according to any of claims 2 to 6, **characterized in that** bolts (11) are supported or anchored, respectively, on the device or on the inner shell or outer shell (1, 2) or on the insulating shell (10), respectively, on the one hand, by a collar provided on one of the ends thereof and, on the other hand, by a self-locking sealing ring (25) slid onto the other end of the bolt (11).

8. A container according to any of claims 2 to 7, **characterized in that** bolts (11) are equipped with snap-in lugs (13) provided at their ends which serve for being inserted into openings (17, 18) and for anchoring the bolts (11) in said openings (17, 18), with the openings (17, 18) being provided on the device or on the inner shell or outer shell (1, 2) or on an insulating shell (10), respectively.

9. A container according to any of claims 2 to 8, **characterized in that** bolts (11) are anchored with one end on the device or on the inner shell or outer shell (1, 2), respectively, or on an insulating shell (10) by means of a screw connection.

10. A container according to any of claims 1 to 9, **characterized in that** the longitudinal axis of the positioning elements (11, 27) is inclined toward the surface of the insulating shell (10) or of the device or of the inner shell or outer shell (1, 2), respectively, in the area of the attachment of the positioning elements (11).

11. A container according to any of claims 1 to 10, **characterized in that** positioning elements are formed from magnets (26).

12. A container according to any of claims 1 to 11, **characterized in that** positioning elements (11, 26, 27) are arranged with regard to a longitudinal axis (6) of the container so as to be evenly distributed around said longitudinal axis (6).

13. A container according to claim 12, **characterized in that** three positioning elements (11, 26, 27) are arranged and distributed around the longitudinal axis (6).

14. A container according to any of claims 1 to 13, **characterized in that** the insulating shell (10) or the insulating shells (10), respectively, is/are formed from two half shells (10', 10") each, which half shells (10', 10") are connectable to each other by a plug connection (21) to form an insulating shell (10).

15. A container according to claim 14, **characterized in that** each of the half shells (10', 10") is directly or indirectly attached to the device or to the outer shell and/or inner shell (1, 2) or to a further insulating shell (10), respectively, via positioning elements (11, 27).

16. A container according to any of claims 1 to 15, **characterized in that** the insulating shell(s) is/are attached to the outer shell and/or inner shell via positioning elements (11, 26, 27), with forces securing the parts (10', 10") of the insulating shell(s) (10) relative to each other which are preferably produced by springs.

17. A container according to any of claims 1 to 16, **characterized in that** the parts (10', 10") of an insulating shell (10) are positionally secured relative to each other by hooks (30).

18. A container according to any of claims 1 to 17, **characterized in that** the parts (10', 10") of an insulating shell (10) are connected to each other by an adhesive or welded joint (29).

19. A container comprising a plurality of insulating shells (10) according to any of claims 1 to 18, **characterized in that** positioning elements are designed as helical springs (27), with the helical springs (27) being arranged in alignment with each other for supporting adjacent insulating shells (10) and the insulating shells (10) exhibiting access openings (34) to the helical springs (27).

20. A container according to any of claims 1 to 19, **characterized in that** a magnetizing coil is connected to the outer shell (1) in a positionally stable manner via fastening elements (3).

21. A cryocontainer according to any of claims 1, 4 to 6 or 12 to 18, **characterized in that** the insulating shells (47', 47", 47"',...) are connected both to each other and to the insulating shell designed as an inner tank (43) and/or to the outer shell designed as an outer container (42) via suspension belts or bands (48a, 48b), respectively, which in particular are flexible and/or pliable, respectively.

22. A cryocontainer according to claim 21, **characterized in that** first suspension belts or bands (48a), respectively, are arranged in the area of the top side or of an upper pole region, respectively, of the inner tank (43) and of the outer container (42), in particular in the boundary region or transition region, respectively, of the top side toward the lateral surface, and second suspension belts or bands (48b), respectively, are arranged in the area of the opposite bottom side or of a lower pole region, respectively, of the inner tank (43) and of the outer container (42), in particular in the boundary region or transition region, respectively, of the bottom side toward the lateral surface.

23. A cryocontainer according to any of claims 21 or 22, **characterized in that** at least three first and second suspension belts (48a, 48b) uniformly arranged on the periphery are in each case provided.

24. A cryocontainer according to any of claims 21 to 23, **characterized in that** the suspension belts or bands (48a, 48b), respectively, are directly attached to the inside of the outer container (42) via outer fastening devices (65) and each insulating shell (47', 47", 47"',...) is fixed in a positionally firm manner with regard to the outer container (42) and the other insulating shells (47', 47", 47"',...), with the inner tank (43) being supported by the suspension belts or bands (48a, 48b), respectively, in a contactless manner.

25. A cryocontainer according to any of claims 21 to 23, **characterized in that** the suspension belts or bands (48a, 48b), respectively, are directly attached to the outside of the inner tank (43) via inner fastening devices (66) and each insulating shell (47', 47", 47"',...) is fixed in a positionally firm manner with regard to the inner tank (43) and the other insulating shells (47', 47", 47"',...), with the outer container (42) being supported by the suspension belts or bands (48a, 48b), respectively, in a contactless manner.

26. A cryocontainer according to claim 25, **characterized in that** the inner fastening devices (66) are arranged in cavities (67).

27. A cryocontainer according to any of claims 21 to 26, **characterized in that** each insulating shell (47', 47", 47"',...) exhibits recesses (70, 71, 72) through which the suspension belts or bands (48a, 48b), respectively, run.

28. A cryocontainer according to any of claims 21 to 27, **characterized in that** the suspension belts or bands (48a, 48b), respectively, run in the shape of a meander from one insulating shell (47'....) to the other insulating shell (47'....) between the recesses (70, 71, 72) of the individual insulating shells (47'....) and that the suspension belts or bands (48a, 48b), respectively, preferably produce force components which compress the oppositely located corresponding partial shells (47a, 47b), whereby lifting of the partial shells (47a, 47b) is permitted if the suspension belts or bands (48a, 48b), respectively, are attached to the outer container (42).

29. A cryocontainer according to any of claims 21 to 28, **characterized in that** the suspension belts (48a, 48b) are fixed to the respective insulating shell (47'....) via clamping devices (61, 63).

30. A cryocontainer according to any of claims 21 to 29, **characterized in that** rounded deflection elements (60) are provided on each insulating shell (47'....), which deflection elements are arranged in the front recesses (70).

31. A cryocontainer according to any of claims 21 to 30, **characterized in that** each suspension belt (48a, 48b) extends toward the front recess (70""") of the outermost insulating shell (47"""), starting from the outer fastening device (65) of the outer container (42), is passed through said front recess (70""") and is deflected by approximately 180° in particular via the deflection element (60""") of the outermost insulating shell (47"""), is furthermore passed through the middle recess (71""") and back to the outer side of the outermost insulating shell (47""") and is secured in the clamping device (61 """, 63""") of the outermost insulating shell (47"""), is furthermore passed through the rear recess (72""") of the outermost insulating shell (47""") and is deflected by approximately 180° and is guided toward the front recess (70""') or the deflection element (60""') of the next inner insulating shell (47""'), respectively, and said path continues inwards through all insulating shells (47) until the suspension belt (48a, 48b) ends on the clamping device (61', 63') of the innermost insulating shell (47') and/or is finally fixed there.

32. A cryocontainer according to any of claims 21 to 30, **characterized in that** each suspension belt (48a, 48b) extends toward the rear recess (72') of the innermost insulating shell (47'), starting from the inner fastening device (66) of the inner tank (43), is passed through said rear recess (72') and deflected by approximately 180°, is secured in the clamping device (61', 63') of the innermost insulating shell (47'), is furthermore passed through the middle recess (71') and back to the inner side of the innermost insulating shell (47'), is furthermore passed through the front recess (70') and is deflected by approximately 180° in particular via the deflection element (60') of the innermost insulating shell (47') and is guided toward the rear recess (72") of the next outer insulating shell (47") and said path continues outwards through all insulating shells (47) until the suspension belt (48a, 48b) ends on the clamping device (61""", 63""") of the outermost insulating shell (47""") and/or is finally fixed there.

33. A cryocontainer according to any of claims 21 to 32, **characterized in that** the suspension belts (48a, 48b), the fastening elements (45a, 45b), the deflection elements (60) and/or the clamping devices (61, 63) are arranged in bulges (49) formed from the surface of the outer container (42) and of the insulating shells (47) and/or form those bulges (49).

34. A cryocontainer according to any of claims 21 to 33, **characterized in that** the cryocontainer (41) and the outer container (42) and the insulating shells (47', 47", 47"',...), respectively, are designed in two or more pieces from at least two single elements, for example, from a first and a second outer container part (42a, 42b) or from first and second partial shells (47a, 47b), respectively, or are composed of single elements which can be stuck together and which are assembled in the course of the installation to form the finished cryocontainer (41).

35. A cryocontainer according to any of claims 21 to 34, **characterized in that** the single elements or the first and second partial shells (47a, 47b), respectively, are connectable via plug, adhesive and/or snap-in connections (80).

36. A cryocontainer according to any of claims 21 to 35, **characterized in that** on each first partial shell (47a', 47a",...) and on each second partial shell (47b', 47b",...), several positioning means (81a', 81 b', 81a", 81b",...) distributed along the rim or circumference thereof particularly in a regular manner, for example, essentially rectangular elevations adapted to the curvature of the partial shells (47a, 47b) or interlocking pegs and bushes, are in each case formed, wherein the positioning means (81a', 81a",...) of the first partial shells (47a', 47a",...) are operatively connectable to the positioning means (81 b', 81b",...) of the second partial shells (47b', 47b",...), in particular via a pressurized and/or tensile connection, e.g., a snap-in and/or adhesive connection, and wherein the positioning means (81a', 81a",...) of the first partial shells (47a', 47a",...) are arranged so as to be offset from each other with regard to the circumference of the first partial shells (47a', 47a",...) or partially overlap each other in an offset manner, respectively, and wherein the positioning means (81b', 81b",...) of the second partial shells (47b', 47b",...) are arranged so as to be offset from each other with regard to the circumference of the second partial shells (47b', 47b",...) or partially overlap each other in an offset manner, respectively, with segments or zones, respectively, of the positioning means (81a', 81b', 81a", 81b",...) in each case protruding or being uncovered, respectively, in such a way that they are admittable as working surfaces for appropriate installation tools.

37. A cryocontainer according to claim 36, **characterized in that** the positioning means (81a', 81b', 81a", 81b",...) are designed as essentially rectangular elevations (81a', 81b', 81a", 81b",...) adapted to the curvature of the partial shells (47a, 47b), wherein the elevations (81a', 81b', 81a", 81b",...) in turn exhibit in each case one edge (42a, 42b) projecting outwards particularly in an oblique manner, wherein the individual second partial shells (47a) and the respective corresponding first partial shells (47b) are insertable into each other or connectable to each other, respectively, in such a way that the edges (82) of the second partial shells (47a) will in each case non-positively engage a locking rail (83) formed in each first partial shell (47b), or vice versa, and a pressurized and/or tensile connection will be provided.

38. A cryocontainer according to any of claims 21 to 37, **characterized in that** recesses (100) closable by one-piece or multi-piece lids (58) are formed in the partial shells (47a, 47b).

39. A cryocontainer according to any of claims 21 to 38, **characterized in that** the clearance (46) is free from superinsulating layers, in particular Multi Layer Insulation (MLI) layers.

## Revendications

1. Récipient pour la collecte de fluides et/ou d'appareils cryogéniques qui doivent être conservés à basse température, de préférence au-dessous de 150 K, comprenant une coque extérieure (1) et une coque isolante (10) reliée directement ou indirectement à celle-ci ou soutenue directement ou indirectement par celle-ci de façon stable en position via des éléments de positionnement, laquelle est entourée le cas échéant par une ou plusieurs autres coques isolantes (10), dans lequel soit l'appareil soit une coque intérieure (2) pour la conservation de fluides cryogéniques est relié(e) de manière stable en position avec la coque extérieure via des éléments de fixation (3), **caractérisé en ce que** chaque coque isolante (10) est réalisée au moins en deux pièces et est fixée sur la coque extérieure (1) et/ou sur l'appareil et/ou sur la coque intérieure (2) au moyen d'éléments de positionnement (11, 26, 27) indépendants des éléments de fixation (3), dans lequel la coque isolante (10) est écartée de la coque extérieure ou de la coque intérieure (1, 2), ou respectivement de l'appareil, ou encore d'une autre coque isolante (10) en l'absence de contact en formant un intervalle (15).

2. Récipient selon la revendication 1, **caractérisé en ce que** les éléments de positionnement (11) sont formés par des goujons.

3. Récipient selon la revendication 1 ou 2, **caractérisé en ce que** les éléments de positionnement sont réalisés sous forme d'éléments à ressort (27), en particulier d'éléments à ressorts hélicoïdaux.

4. Récipient selon l'une des revendications 1 à 3, **caractérisé en ce que** les éléments de positionnement (11, 26, 27) serrent une coque isolante (10) contre la coque intérieure (2) ou contre la coque extérieure (1) et sont de façon correspondante soutenus ou ancrés d'une part sur la coque isolante (10) et d'autre part sur la coque intérieure ou la coque extérieure (1, 2).

5. Récipient selon l'une des revendications 1 à 4, **caractérisé en ce qu'**en présence de deux ou plusieurs coques isolantes (10), les éléments de positionnement (11, 27) sont soutenus ou ancrés d'une part sur une première coque isolante (10) et d'autre part sur une autre coque isolante (10) voisine de la première coque isolante (10).

6. Récipient selon l'une des revendications 1 à 5, **caractérisé en ce que** les coques isolantes (10) ou la coque extérieure (1) est/sont pourvue(s), aux emplacements auxquels sont prévus des éléments de positionnement (11, 26, 27), de bombements (14) s'étendant le long des éléments de positionnement (11, 26, 27) pour la réception locale d'un élément de positionnement (11, 26, 27), et les éléments de positionnement (11, 26, 27) sont soutenus ou ancrés au niveau des extrémités des bombements (14).

7. Récipient selon l'une des revendications 2 à 6, **caractérisé en ce que** des goujons (11) sont soutenus ou ancrés sur l'appareil ou sur la coque intérieure ou la coque extérieure (1, 2), ou encore sur la coque isolante (10) d'une part avec une collerette prévue à l'une de ses extrémités et d'autre part avec une bague de blocage (25) autobloquante, qui est enfilée à l'autre extrémité du goujon (11).

8. Récipient selon l'une des revendications 2 à 7, **caractérisé en ce que** le goujon (11) est pourvu d'ergots d'encliquetage (13) prévus à ses extrémités, qui servent à la mise en place dans des ouvertures (17, 18) et pour l'ancrage du goujon (11) dans ces ouvertures (17, 18), et lesdites ouvertures (17, 18) sont prévues sur l'appareil ou sur la coque intérieure ou la coque extérieure (1, 2) ou encore sur une coque isolante (10).

9. Récipient selon l'une des revendications 2 à 8, **caractérisé en ce que** les goujons (11) sont ancrés par une extrémité au moyen d'une liaison vissée avec l'appareil ou avec la coque intérieure ou la coque extérieure (1, 2) ou encore avec une coque isolante (10).

10. Récipient selon l'une des revendications 1 à 9, **caractérisé en ce que** l'axe longitudinal des éléments de positionnement (11, 27) est incliné par rapport à la surface de la coque isolante (10) ou de l'appareil ou encore de la coque intérieure ou la coque extérieure (1, 2) dans la région de la fixation des éléments de positionnement (11).

11. Récipient selon l'une des revendications 1 à 10, **caractérisé en ce que** les éléments de positionnement sont formés par des aimants (26).

12. Récipient selon l'une des revendications 1 à 11, **caractérisé en ce que** les éléments de positionnement (11, 26, 27) sont agencés tout autour d'un axe longitudinal (6) du récipient de manière régulièrement répartie autour de celui-ci.

13. Récipient selon la revendication 12, **caractérisé en ce que** trois éléments de positionnement (11, 26, 27) sont agencés de manière répartie autour de l'axe longitudinal (6).

14. Récipient selon l'une des revendications 1 à 13, **caractérisé en ce que** la coque isolante (10) ou les coques isolantes (10) est/sont formée(s) respectivement par deux demi-coques (10', 10"), lesdites demi-coques (10', 10") pouvant être reliées l'une à l'autre au moyen d'une jonction à enfichage (21) pour former une coque isolante (10).

15. Récipient selon la revendication 14, **caractérisé en ce que** chacune des demi-coques (10', 10") est fixée au moyen d'éléments de positionnement (11, 27) directement ou indirectement sur l'appareil ou sur la coque intérieure et/ou extérieure (1, 2) ou encore sur une autre coque isolante (10).

16. Récipient selon l'une des revendications 1 à 15, **caractérisé en ce que** la ou les coque(s) isolante(s) est/sont fixée(s) au moyen d'éléments de positionnement (11, 26, 27) sur la coque extérieure et/ou la coque intérieure en engendrant des forces, provoquées de préférence par des ressorts, qui bloquent les parties (10', 10") des coques isolantes (10) l'une contre l'autre.

17. Récipient selon l'une des revendications 1 à 16, **caractérisé en ce que** les parties (10', 10") d'une coque isolante (10) sont bloquées en position l'une contre l'autre au moyen de crochets (30).

18. Récipient selon l'une des revendications 1 à 17, **caractérisé en ce que** les parties (10', 10") d'une coque isolante (10) sont reliées l'une à l'autre par une jonction collée ou soudée (29).

19. Récipient comprenant une pluralité de coques isolantes (10) selon l'une des revendications 1 à 18, **caractérisé en ce que** les éléments de positionnement sont réalisés sous forme de ressorts hélicoïdaux (27), lesdits ressorts hélicoïdaux (27) étant agencés en alignement les uns par rapport aux autres pour soutenir des coques isolantes voisines (10), et les coques isolantes (10) présentent des ouvertures d'accès (34) vers les ressorts hélicoïdaux (27).

20. Récipient selon l'une des revendications 1 à 19, **caractérisé en ce qu'**une bobine magnétique est reliée de manière stable en position avec la coque extérieure (1) via les éléments de fixation (3).

21. Récipient cryogénique selon l'une des revendications 1, 4 à 6 ou 12 à 18, **caractérisé en ce que** les coques isolantes (47', 47", 47"', ...) sont reliées aussi bien les unes avec les autres qu'avec la coque isolante réalisée sous forme de réservoir intérieur (43) et/ou qu'avec la coque extérieure réalisée sous forme de réservoir extérieur (42) via des sangles ou des bandes de suspension (48a, 48b) en particulier flexibles ou souples.

22. Récipient cryogénique selon la revendication 21, **caractérisé en ce que** des premières sangles ou bandes de suspension (48a) sont agencées dans la région de la face supérieure ou d'une zone polaire supérieure du réservoir intérieur (43) et du réservoir extérieur (42), en particulier dans la zone de bordure ou la zone de transition de la face supérieure vers la surface enveloppe, et des secondes sangles ou bandes de suspension (48b) sont agencées dans la région de la face inférieure opposée ou d'une zone polaire inférieure du réservoir intérieur (43) et du récipient extérieur (42), en particulier dans la région de bordure ou la région de transition de la face inférieure vers la surface enveloppe.

23. Récipient cryogénique selon l'une des revendications 21 ou 22, **caractérisé en ce qu'**il est prévu respectivement au moins trois premières et trois secondes sangles de suspension (48a, 48b) agencées régulièrement sur la périphérie.

24. Récipient cryogénique selon l'une des revendications 21 à 23, **caractérisé en ce que** les sangles ou bandes de suspension (48a, 48b) sont fixées directement sur la face intérieure du récipient extérieur (42) via des organes de fixation extérieurs (65), et chaque coque isolante (47', 47", 47"', ...) est fixée fermement en position par rapport au récipient extérieur (42) et par rapport aux autres coques isolantes (47', 47", 47"', ...), le réservoir intérieur (43) étant monté sans contact par les sangles ou les bandes de suspension (48a, 48b).

25. Récipient cryogénique selon l'une des revendications 21 à 23, **caractérisé en ce que** les sangles ou bandes de suspension (48a, 48b) sont fixées directement sur la face extérieure du réservoir intérieur (43) via des moyens de fixation intérieurs (66), et chaque coque isolante (47', 47", 47"', ...) est fixée fermement en position par rapport au récipient extérieur (42) et par rapport aux autres coques isolantes (47', 47", 47"', ...), le récipient extérieur (42) étant monté sans contact par les sangles ou les bandes de suspension (48a, 48b).

26. Récipient cryogénique selon la revendication 25, **caractérisé en ce que** les moyens de fixation intérieurs (66) sont agencés dans des renfoncements (67).

27. Récipient cryogénique selon l'une des revendications 21 à 26, **caractérisé en ce que** chaque coque isolante (47', 47", 47"', ...) comporte des évidements (70, 71, 72) à travers lesquels s'étendent les sangles ou bandes de suspension (48a, 48b).

28. Récipient cryogénique selon l'une des revendications 21 à 27, **caractérisé en ce que** les sangles ou les bandes de suspensions (48a, 48b) s'étendent d'une coque isolante (47', ...) à une autre coque isolante (47', ...) en formant des méandres entre les évidements (70, 71, 72) des coques isolantes individuelles (47', ...), et **en ce que** les sangles ou les bandes de suspension (48a, 48b) engendrent de préférence des composantes de force qui pressent ensemble les coques partielles (47a, 47b) correspondantes respectivement opposées, grâce à quoi, lors de la fixation des sangles ou des bandes de suspension (48a, 48b) sur le récipient extérieur (42), un soulèvement des coques partielles (47a, 47b) est permis.

29. Récipient cryogénique selon l'une des revendications 21 à 28, **caractérisé en ce que** les sangles de suspension (48a, 48b) sont fixées via des dispositifs de serrage (61, 63) sur la coque isolante respective (47', ...).

30. Récipient cryogénique selon l'une des revendications 21 à 29, **caractérisé en ce que** des éléments de renvoi arrondis (60) sont prévus sur chaque coque isolante (27', ...), qui sont agencés dans les évidements antérieurs (70).

31. Récipient cryogénique selon l'une des revendications 21 à 30, **caractérisé en ce que** chaque sangle de suspension (48a, 48b), en partant du moyen de fixation extérieur (65) du récipient extérieur (43), s'étend jusqu'à l'évidement antérieur (70""") de la coque isolante la plus extérieure (47"""), est passée à travers cet évidement antérieur (70""") et est renvoyée d'environ 180°, en particulier via l'élément de renvoi (60""") de la coque isolante la plus extérieure (47"""), est ramenée ensuite à travers l'évidement médian (71 """) vers la face extérieure de la coque isolante la plus extérieure (47"""), et est fixée dans le dispositif de serrage (61""", 63""") de la coque isolante la plus extérieure (47), est passée ensuite à travers l'évidement postérieur (72""") de la coque isolante la plus extérieure (47""") et est renvoyée d'environ 180° et guidée en direction de l'évidement antérieur (70""') ou respectivement vers l'élément de renvoi (60""') de la coque isolante (47""') voisine vers l'intérieur, et ce trajet se poursuit vers l'intérieur à travers toutes les coques isolantes (47) jusqu'à ce que la sangle de suspension (48a, 48b) se termine ou soit fixée à son extrémité au niveau du dispositif de serrage (61', 63') de la coque isolante la plus intérieure (47').

32. Récipient cryogénique selon l'une des revendications 21 à 30, **caractérisé en ce que** chaque sangle de suspension (48a, 48b), partant du moyen de fixation intérieur (66) du réservoir intérieur (43) s'étend jusqu'à l'évidement postérieur (72') de la coque isolante (47') la plus intérieure, est ensuite passée à travers cet évidement postérieur (72') et renvoyée d'environ 180°, est fixée dans le dispositif de serrage (61', 63') de la coque isolante la plus intérieure (47'), et est ensuite ramenée à travers l'évidement médian (71') à nouveau vers la face intérieure de la coque isolante la plus intérieure (47'), est ensuite passée à travers l'évidement antérieur (70') et est renvoyée d'environ 180°, en particulier via l'élément de renvoi (60') de la coque isolante la plus intérieure (47'), et est guidée en direction de l'évidement postérieur (72") de la coque isolante (47") voisine en direction de l'extérieur, et ce trajet se poursuit à travers toutes les coques isolantes (47) vers l'extérieur jusqu'à ce que la sangle de suspension (48a, 48b) se termine ou soit définitivement fixée au niveau du dispositif de serrage (61""", 63""") de la coque isolante la plus extérieure (47""").

33. Récipient cryogénique selon l'une des revendications 21 à 32, **caractérisé en ce que** les sangles de suspension (48a, 48b), les éléments de fixation (45a, 45b), les éléments de renvoi (60) et/ou les dispositifs de serrage (61, 63) sont agencés dans des bombements (49) réalisés à partir de la surface du récipient extérieur (42) et des coques isolantes (47), ou forment ces bombements (49).

34. Récipient cryogénique selon l'une des revendications 21 à 33, **caractérisé en ce que** le récipient cryogénique (41) ou le récipient extérieur (42) ou les coques isolantes (47', 47", 47"',) sont formés par au moins deux éléments individuels en deux ou en plusieurs parties, par exemple en une première partie de récipient extérieure et une seconde partie de récipient extérieure (42a, 42b), respectivement en une première et une seconde coque partielle (47a, 47b), ou sont respectivement composés d'éléments individuels susceptibles d'être enfichés ensemble, qui sont assemblés au cours du montage pour réaliser le récipient cryogénique fini (41).

35. Récipient cryogénique selon l'une des revendications 21 à 34, **caractérisé en ce que** les éléments individuels, ou respectivement les premières et secondes coques partielles (47a, 47b), peuvent être reliés via des liaisons à enfichage, des liaisons collées et/ou des liaisons à enclenchement (80).

36. Récipient cryogénique selon l'une des revendications 21 à 35, **caractérisé en ce que** sur chaque première coque partielle (47a', 47a", ...) et sur chaque seconde coque partielle (47b', 47b", ...) sont réalisés respectivement plusieurs moyens de positionnement (81a', 81b', 81a", 81b", ...) répartis en particulier régulièrement le long de leur bordure ou de leur périphérie, par exemple des surélévations essentiellement rectangulaires adaptées à la courbure des coques partielles (47a, 47b) ou des tenons et des douilles en engagement mutuel, lesdits moyens de positionnement (81a', 81a", ...) des premières coques partielles (47a', 47a", ... ) sont susceptibles d'être reliés en coopération avec les moyens de positionnement (81 b', 81b", ...) des secondes de coques partielles (47b', 47b", ...), en particulier via une liaison en compression et/ou en traction, par exemple une liaison à enclenchement et/ou une liaison collée, et les moyens de positionnement (81 a', 81 a", ...) des premières coques partielles (47a', 47a", ... ) sont agencés en décalage mutuel par rapport à la périphérie des premières coques partielles (47a', 47a", ...), ou se chevauchent partiellement en décalage, et dans lequel les moyens de positionnement (81b', 81b", ...) des secondes coques partielles (47b', 47b", ...) sont agencés en décalage les uns par rapport aux autres par rapport à la périphérie des secondes coques partielles (47b', 47b", ...), ou se chevauchent partiellement en décalage, et les tronçons partiels ou zones partielles respectifs/respectives des moyens de positionnement (81a', 81b', 81a", 81b", ...) dépassent, ou ne sont pas recouvert(e)s de telle manière qu'ils/elles peuvent être utilisé(e)s comme surface d'attaque pour des outils de montage correspondants.

37. Récipient cryogénique selon la revendication 36, **caractérisé en ce que** les moyens de positionnement (81a', 81b', 81a", 81b", ...) sont réalisés comme des surélévations (81a', 81 b', 81a", 81b", ...) essentiellement rectangulaires adaptées à la courbure des coques partielles (47a, 47b), lesdites surélévations (81a', 81b', 81a", 81b", ...) présentant à leur tour respectivement une arête, en particulier oblique, en saillie vers l'extérieur (42a, 42b), et les secondes coques partielles individuelles (47a) et les premières coques partielles (47b) respectivement correspondantes peuvent être enfilées les unes dans les autres ou être reliées les unes aux autres de telle manière que les arêtes (82) des secondes coques partielles (47a) s'engagent en coopération de forces respectivement dans un rail d'enclenchement (83) réalisé dans chaque première coque partielle (47b), ou inversement, et il se forme une liaison en compression et/ou en traction.

38. Récipient cryogénique selon l'une des revendications 21 à 37, **caractérisé en ce que** des évidements (100) susceptibles d'être refermés par des couvercles (58) en une ou en plusieurs pièces, sont réalisés dans les coques partielles (47a, 47b).

39. Récipient cryogénique selon l'une des revendications 21 à 38, **caractérisé en ce que** l'espace intermédiaire (46) est exempt de couches de superisolation, en particulier de couches d'isolation multicouches dites couches MLI (Multi Layer Insulation).
